**Europäisches Patentamt**

**European Patent Office**

**Office européen des brevets**

(19)

(11) Publication number: **0 086 566**
**B1**

(12)

# EUROPEAN PATENT SPECIFICATION

(45) Date of publication of patent specification: **18.10.89**

(21) Application number: **83300264.5**

(22) Date of filing: **19.01.83**

(51) Int. Cl.⁴: **G 11 B 5/09,** H 03 M 13/00,
G 06 F 11/10

(54) Apparatus for error correction.

(30) Priority: **19.01.82 JP 6543/82**

(43) Date of publication of application:
**24.08.83 Bulletin 83/34**

(45) Publication of the grant of the patent:
**18.10.89 Bulletin 89/42**

(84) Designated Contracting States:
**AT DE FR GB NL**

(56) References cited:
**BE-A- 889 322**
**BE-A- 890 231**
**GB-A-2 027 958**
**US-A-4 107 652**
**US-A-4 292 684**

**IBM TECHNICAL DISCLOSURE BULLETIN, vol.
19, no. 9, February 1977, pages 3550-3554, New
York, US; J.O.NICHOLSON: "Cyclic redundancy
check system".**

**IBM TECHNICAL DISCLOSURE BULLETIN, vol.
17, no. 2, July 1974, pages 374-381, New York,
US; R.A.HEALEY: "Error checking and
correction of microprogram control words
with a late branch field".**

(73) Proprietor: **SONY CORPORATION**
**7-35 Kitashinagawa 6-Chome Shinagawa-ku
Tokyo 141 (JP)**

(72) Inventor: **Furuya, Tsuneo c/o Patent Division
Sony Corporation 7-35 Kitashinagawa-6
Shinagawa-ku Tokyo (JP)**
Inventor: **Fukami, Tadashi c/o Patent Division
Sony Corporation 7-35 Kitashinagawa-6
Shinagawa-ku Tokyo (JP)**

(74) Representative: **Cotter, Ivan John et al
D. YOUNG & CO. 10 Staple Inn
London WC1V 7RD (GB)**

(56) References cited:
**IBM TECHNICAL DISCLOSURE BULLETIN, vol.
16, no. 5, October 1973, pages 1432-1436, New
York, US; N.K.OUCHI et al.: "Random-access
memory implementation of interlaced error
correction codes".**

**IBM TECHNICAL DISCLOSURE BULLETIN, vol.
23, no. 10, March 1981, pages 4597-4599, New
York, US; C.L.CHEN: "Parallel implementation
of double-error correction and triple-error
detection".**

Courier Press, Leamington Spa, England.

**Description**

This invention relates to an apparatus for error correction and particularly to an apparatus for error correction suitable for use in a transmission system for complex data which is capable of error correction with arrangement and rearrangement of data sequences on a time-base.

We have previously proposed a so-called cross-interleave technique as a data transmission system effective against burst errors (see, for example, Japanese Patent Applications Nos. 47247/78, 67608/80 and 84428/80). According to this cross-interleave technique, one word contained in each of a plurality of pulse code modulated (PCM) data sequences in a first arrangement state on a plurality of channels is supplied to a first error correction encoder to generate a first check word series, the first check word series and the PCM data sequences on the plurality of channels are converted to a second arrangement state, and one word contained in each of them is supplied to a second error correction encoder to generate a second check word series. That is, a double interleaving processing (rearrangement of arrangement state) is carried out in each word unit. The purpose of the interleaving technique is to disperse the check words and PCM data contained in the common error correction block and then transmit the same, thereby to reduce the number of error words within plural words contained in a common error correction block when they are reconverted to the original arrangement state at the receiving side. In other words, when burst error occurs upon transmission, the burst error can be dispersed. Doubling such interleaving processing allows the first and second check words respectively to form independent error correction blocks so that, even when an error cannot be corrected by one check word, such error can be corrected by the other check word and thereby the error correction ability can be improved.

The error correction apparatus for such data transmission system is required to carry out a complex calculation processing for error correction and de-interleaving processing (rearrangement). Accordingly, forming the error correction apparatus by random logic, as previously proposed, causes a disadvantage in the case where the apparatus is formed as a large-scale integrated circuit (LSI) and so on.

For a calculation apparatus of a microprogram system, when the contents of the calculation processing are complicated, it is possible to arrange function blocks for calculation processing in parallel to one another and to control the function blocks by means of a microprogram system. Thus, the respective function blocks carry out the calculation processing operations simultaneously or in parallel, which leads to many more calculation processing operations in a shorter time period.

In such calculation apparatus of a microprogram system, it is desired simultaneously to control the function blocks as far as possible, because the calculation processing can then be executed with more satisfactory efficiency. But, to control many more function blocks simultaneously, the number of bits in one step has to be increased. This causes the capacity of a program memory for memorizing a microprogram, for example a read-only memory (ROM), to be increased.

Belgium Patent No. BE—A—889 322 (which corresponds to UK Patent Application No. GB—A—2 079 993) discloses apparatus for error correction, the apparatus being according to the first (precharacterising) part of claim 1 hereof.

IBM Technical Disclosure Bulletin, Vol. 19, No. 9, February 1977 discloses the use of microprogramming techniques to control the generation of a cyclic redundancy check code.

The present invention provides apparatus for error correction as set forth in claim 1 hereof.

Preferred apparatus embodying this invention and described in detail hereinbelow is of simple construction and is capable of efficient error correction. The preferred apparatus can individually, and simultaneously or in parallel, control the error correction arithmetic circuit and the pointer addition circuit by means of the microprogram memorized in the program memory. The preferred apparatus is capable of controlling many more function blocks without greatly increasing the capacity of the program memory in which the microprogram is stored. That is, with a small capacity memory the apparatus can perform many more calculation processing operations so that calculation processing can be performed efficiently. The apparatus may employ a multiplication circuit of simple arrangement which is capable of carrying out multiplication on a galois field GF $(2^n)$. More specifically, the apparatus may carry out the multiplication on the galois field GF $(2^n)$ through the use of an exclusive-OR circuit for (mod. 2) addition and multiplication, an AND circuit, an exclusive-OR circuit for an α-multiplier, a flip-flop circuit for delay, or the like.

The invention will now be further described, by way of illustrative and non-limiting example, with reference to the accompanying drawings, in which like references designate the same elements and parts throughout, and in which:

Figs. 1 to 5 are diagrams used to explain embodiments of the present invention;

Fig. 6 is a block diagram showing generally an embodiment of apparatus for error correction according to this invention;

Fig. 7 is a block diagram showing a decoding section of the apparatus of Fig. 6;

Fig. 8 is a flow chart for explaining the operation of the decoding section of Fig. 7;

Figs. 9A and 9B are diagrams showing formats of a microprogram memorized in a ROM in the decoding section of Fig. 7;

Fig. 10 is a diagram showing an example of the format in Figs. 9A and 9B;

Figs. 11 and 12 are diagrams both used to explain the formats of Figs. 9A and 9B;

Fig. 13 is a block diagram schematically showing an example of an arithmetic circuit for one word error correction in the decoding section of Fig. 7;

Figs. 14A to 14C are diagrams respectively showing examples of an $\alpha$-multiplier, an $\alpha^2$-multiplier and an $\alpha^3$-multiplier used in the example shown in Fig. 13;

Figs. 15A to 15C are diagrams respectively showing examples of an $\alpha^{-1}$-multiplier, an $\alpha^{-2}$-multiplier and an $\alpha^{-3}$-multiplier used in the example shown in Fig. 13;

Fig. 16 is a block diagram schematically showing a decoding section of another embodiment of apparatus for error correction according to the present invention;

Fig. 17 is a flow chart used to explain the operation of the decoding section of Fig. 16;

Fig. 18 is a block diagram showing an example of an arithmetic circuit for one word error correction and so on in Fig. 16; and

Figs. 19 and 20 are diagrams used to explain the example of Fig. 18.

Before describing embodiments of the apparatus for error correction according to this invention, an error correction code and a transmission system to which the present invention is applicable will be explained first.

To describe an error correction code, there is usually employed a vector representation or a representation by a cyclic group.

First, an irreducible m-th order polynomial F(x) will be considered on a galois field GF(2). On a galois field GF(2) containing only the elements "0" and "1", the irreducible polynomial F(x) has no real root. Therefore, an imaginary or hypothetical root $\alpha$ which can satisfy F(x)=0, will be considered. At this time, elements $0, \alpha, \alpha^2, \alpha^3, \ldots \alpha^{m-1}$ of $2^m$ numbers, each being differently expressed by a power of $\alpha$ including a zero element, constitute an extension galois field GF($2^m$). This extension field GF($2^m$) is a polynomial ring with an m-th order irreducible polynomial F(x) on the field GF(2) as a modulo. The element of GF($2^m$) can be expressed by a linear combination of

$$1, \alpha=\{x\}, \ \alpha^2=\{x^2\}, \ldots \alpha^{m-1}=\{x^{m-1}\}.$$

That is, these elements can be expressed as:

$$a_0+a_1\{x\}+a_2\{x^2\}+ \ldots +a_{m-1}\{x^{m-1}\}$$

$$=a_0+a_1\alpha+a_2\alpha^2+ \ldots +a_{m-1}\alpha^{m-1}$$

or

$$(a_{m-1}, \ a_{m-2}, \ldots, \ a_2, \ a_1, \ a_0)$$

where $a_0, a_1, \ldots a_{m-1} \in GF(p)$.

By way of example, a galois field GF($2^8$) is considered. Since all data of 8 bits can be expressed by

$$(\text{mod. } F(x)=x^8+x^4+x^3+x^2+1)$$

as:

$$a_7x^7+a_6x^6+a_5x^5+a_4x^4+a_3x^3+a_2x^2+a_1x+a_0$$

or

$$(a_7, \ a_6, \ a_5, \ a_4, \ a_3, \ a_2, \ a_1, \ a_0)$$

$a_7$, for example is assigned to the most significant bit (MSB) side, while $a_0$ is assigned to the least significant bit (LSB) side. $a_n$ belongs to the galois field GF(2) so that it is expressed as either 0 or 1.

The following matrix T of (m×n) is derived from the polynomial F(x).

$$T=\begin{bmatrix} 0 & 0 \ldots 0 & a_0 \\ 1 & 0 \ldots 0 & a_1 \\ 0 & 1 \ldots 0 & a_2 \\ \cdot & \cdot \quad \cdot & \cdot \\ \cdot & \cdot \quad \cdot & \cdot \\ \cdot & \cdot \quad \cdot & \cdot \\ 0 & 0 \ldots 1 & a_{m-1} \end{bmatrix}$$

Another representation of the error correction code is based on a cyclic group. This utilizes the fact that the remaining elements except the zero element on the extension field GF($2^m$) form a multiplicative group of order ($2^m-1$). Expressing the elements of the extension field GF($2^m$) by the use of a cyclic group yields:

$$0, \ 1 \ (=\alpha^{2m-1}), \ \alpha, \ \alpha^2, \ \alpha^3, \ldots \alpha^{2m-2}$$

3

When one word is formed of m bits and one block is formed of *n* words, apparatus embodying this invention arranges the following parity check matrix H to generate *k* check words as:

$$H=\begin{bmatrix} 1 & 1 & \ldots 1 & 1 \\ \alpha^{n-1} & \alpha^{n-2} & \ldots \alpha & 1 \\ \alpha^{2(n-1)} & \alpha^{2(n-2)} & \alpha^2 & 1 \\ \cdot & \cdot & \cdot & \cdot \\ \cdot & \cdot & \cdot & \cdot \\ \cdot & \cdot & \cdot & \cdot \\ \alpha^{(k-1)\,(n-1)} & \alpha^{(k-1)\,(n-2)} & \alpha^{k-1} & 1 \end{bmatrix}$$

The parity check matrix H can also be similarly expressed by using the matrix T as:

$$H=\begin{bmatrix} I & I & \ldots 1 & 1 \\ T^{n-1} & T^{n-2} & \ldots T^1 & I \\ T^{2(n-1)} & T^{2(n-2)} & \ldots T^2 & I \\ \cdot & \cdot & \cdot & \cdot \\ \cdot & \cdot & \cdot & \cdot \\ \cdot & \cdot & \cdot & \cdot \\ T^{(k-1)\,(n-1)} & T^{(k-1)\,(n-2)} & \ldots T^{k-1} & I \end{bmatrix}$$

where I is a unit matrix of $(m \times m)$.

As described above, the representations employing the root $\alpha$ and the matrix T are essentially the same as each other.

For four (k=4) check words for example, the parity check matrix H is given as:

$$H=\begin{bmatrix} 1 & 1 & \ldots 1 & 1 \\ \alpha^{n-1} & \alpha^{n-2} & \ldots \alpha & 1 \\ \alpha^{2(n-1)} & \alpha^{2(n-2)} & \ldots \alpha^2 & 1 \\ \alpha^{3(n-1)} & \alpha^{3(n-2)} & \ldots \alpha^3 & 1 \end{bmatrix}$$

Arranging one block of the received data as a column vector $V=\hat{w}_{n-1}, \hat{w}_{n-2}, \ldots, \hat{w}_1, \hat{w}_0$, where $\hat{w}_i = w_i + e_i$, $e_i$ is error patterns, yields four syndromes $S_0$, $S_1$, $S_2$ and $S_3$ in the receiving side as given by:

$$\begin{bmatrix} S_0 \\ S_1 \\ S_2 \\ S_3 \end{bmatrix} = H \cdot V^T$$

This error correction code can correct up to two words error within one error correction block and if the error location is known, three words error or four words error.

One error correction block contains four check words ($p=w_3$, $q=w_2$, $r=w_1$ and $s=w_0$). These check words are searched for as follows:

$$\begin{bmatrix} p+q+r+s=\Sigma w_i & = & a \\ \alpha^3 p+\alpha^2 q+\alpha r+s=\Sigma \alpha^i w_i & = & b \\ \alpha^6 p+\alpha^4 q+\alpha^2 r+s=\Sigma \alpha^{2i} w_i & = & c \\ \alpha^9 p+\alpha^6 q+\alpha^3 r+s=\Sigma \alpha^{3i} w_i & = & d \end{bmatrix}$$

4

where $\Sigma$ is $\displaystyle\sum_{i=4}^{n-1}$

Omitting a calculation process, the result only is given as:

$$\begin{bmatrix} p \\ q \\ r \\ s \end{bmatrix} = \begin{bmatrix} \alpha^{212} & \alpha^{153} & \alpha^{152} & \alpha^{209} \\ \alpha^{156} & \alpha^2 & \alpha^{135} & \alpha^{152} \\ \alpha^{158} & \alpha^{138} & \alpha^2 & \alpha^{153} \\ \alpha^{218} & \alpha^{158} & \alpha^{156} & \alpha^{212} \end{bmatrix} \begin{bmatrix} a \\ b \\ c \\ d \end{bmatrix}$$

A role of an encoder provided at the transmitting side is to generate the check words p, q, r and s as described above.

Next, an explanation will be given of a fundamental algorithm for error correction where data containing the check words p, q, r and s made so far are transmitted and then received.

[1] For no error: $S_0=S_1=S_2=S_3=0$

[2] For one word error (error pattern is represented as $e_i$):

$$S_0=e_i \quad S_1=\alpha^i e_i \quad S_2=\alpha^{2i} e_i \quad S_3=\alpha^{3i} e_i$$

Thus

$$\begin{bmatrix} \alpha^i S_0 = S_1 \\ \alpha^i S_1 = S_2 \\ \alpha^i S_2 = S_3 \end{bmatrix}$$

Accordingly, whether or not there is one word error can be judged by identifying if the afore-described relations are established with the error location $i$ changing sequentially. Or, the relation

$$\frac{S_1}{S_0} = \frac{S_2}{S_1} = \frac{S_3}{S_2} = \alpha^i$$

is established so that the error location $i$ can be known by comparing the pattern of $\alpha^i$ with that previously stored in a ROM. The syndrome $S_1$ at that time becomes the error pattern $e_i$ itself.

[3] For two words error ($e_i$, $e_j$):

$$\begin{bmatrix} S_0=e_i+e_j \\ S_1=\alpha^i e_i+\alpha^j e_j \\ S_2=\alpha^{2i} e_i+\alpha^{2j} e_j \\ S_3=\alpha^{3i} e_i+\alpha^{3j} e_j \end{bmatrix}$$

Rearranging the above equations

$$\begin{bmatrix} \alpha^j S_0 + S_1 = (\alpha^i + \alpha^j) e_i \\ \alpha^j S_1 + S_2 = \alpha^i (\alpha^i + \alpha^j) e_i \\ \alpha^j S_2 + S_3 = \alpha^{2i} (\alpha^i + \alpha^j) e_i \end{bmatrix}$$

Thus, if

$$\begin{bmatrix} \alpha^i (\alpha^j S_0 + S_1) = \alpha^j S_1 + S_2 \\ \alpha^i (\alpha^j S_1 + S_2) = \alpha^j S_2 + S_3 \end{bmatrix}$$

are satisfied, error is identified as two words error and the error patterns $e_i$ and $e_j$ are given as

EP 0 086 566 B1

$$e_i = \frac{S_0 + a^{-j}S_1}{1 + a^{i-j}} \qquad e_j = \frac{S_0 + a^{-i}S_1}{1 + a^{j-i}}$$

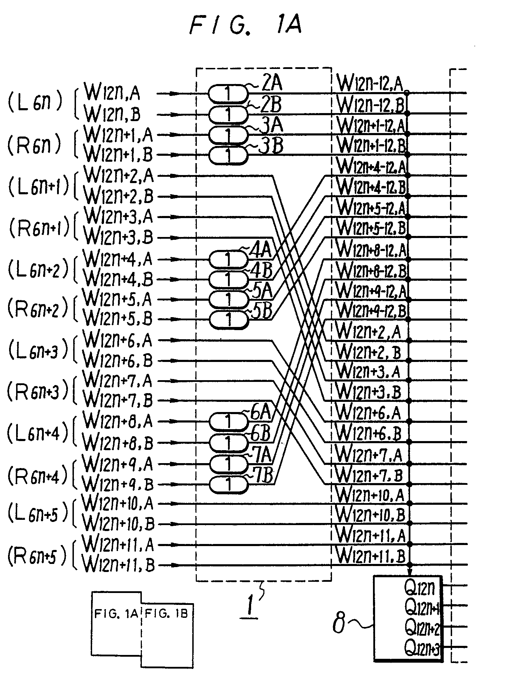

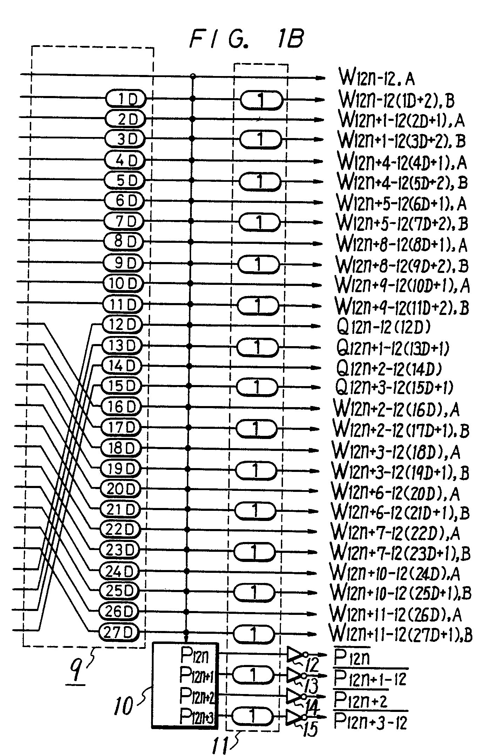

Next, a practical example of a transmission system will be described with reference to Figs. 1 to 5. This transmission system relates to a recording and reproducing system for audio PCM signals and more specifically relates to a magnetic recording and reproducing apparatus and a rotary disc apparatus.

Fig. 1 (formed of Figs. 1A and 1B) shows the overall arrangement of an error correction encoder in the recording system which is supplied at its input side with an audio PCM signal. The audio PCM signal results from sampling right and left stereo signals at a sampling frequency $f_s$ (for example, 44.1 kHz) and converting one sample thereof to one word (code with 2 as complement and formed of 16 bits). Accordingly, PCM data with consecutive words $L_0, L_1, L_2 \ldots$ are produced for the left-channel audio signal, while PCM data with consecutive words $R_0, R_1, R_2, \ldots$ are produced for the right-channel audio signal. PCM data of the right and left channels are respectively separated into 6 channels each, and PCM data sequences of 12 channels in total are therefore supplied to the error correction encoder. At a predetermined timing, 12 words, such as $L_{6n}, R_{6n}, L_{6n+1}, R_{6n+1}, L_{6n+2}, R_{6n+2}, L_{6n+3}, R_{6n+3}, L_{6n+4}, R_{6n+4}, L_{6n+5}, R_{6n+5}$ are supplied thereto. In the illustrative example, one word is separated into an upper 8 bits and a lower 8 bits, and the 12 channels are further separated into 24 channels. For simplicity, one word of PCM data is represented as $w_l$, and the upper 8 bits and lower 8 bits of one word are discriminated from each other by the addition of the suffix A as $w_{l,A}$ and the suffix B as $w_{l,B}$. For example, the word $L_{6n}$ is separated into $w_{12n,A}$ and $w_{12n,B}$, respectively.

The PCM data sequences of 24 channels are supplied to an odd-even interleaver 1. If, now $n$ is given as $0, 1, 2, \ldots$, each of

$$L_{6n} \ (=w_{12n,A}, \ w_{12n,B}), \ R_{6n} \ (=w_{12n+1,A}, \ w_{12n+1,B}),$$

$$L_{6n+2} \ (=w_{12n+4,A}, \ w_{12n+4,B}), \ R_{6n+2} \ (=w_{12n+5,A}, \ w_{12n+5,B}),$$

$$L_{6n+4} \ (=w_{12n+8,A}, \ w_{12n+8,B}), \ R_{6n+4} \ (=w_{12n+9,A}, \ w_{12n+9,B})$$

is an even-numbered word and the words other than the above words are odd-numbered words. The PCM data sequences formed of even-numbered words are respectively delayed by one word by one-word delay circuits 2A, 2B, 3A, 3B, 4A, 4B, 5A, 5B, 6A, 6B, 7A and 7B in the odd-even interleaver 1. It is, of course, possible to delay them by more than one word, for example, 8 words. The odd-even interleaver 1 allows 12 data sequences of even-numbered words to be converted so as to occupy 1st to 12th transmission channels and 12 data sequences of odd-numbered words to be converted so as to occupy 13th to 24th transmission channels.

The purpose of the odd-even interleaver 1 is to prevent each of the right and left stereo signals from having 2 or more consecutive words as error words and also to present such an error word from being made uncorrectable. By way of example, 3 consecutive words $L_{i-1}, L_i, L_{i+1}$ are considered. If the word $L_i$ is erroneous and this error word is uncorrectable, it is desired that either word $L_{i-1}$ or $L_{i+1}$ be correct. This is because when the erroneous data or word $L_i$ is corrected, the erroneous word $L_i$ is interpolated by the immediately preceding correct word $L_{i-1}$ (pre-value holding) or by a mean value between the words $L_{i-1}$ and $L_{i+1}$. The purpose of the delay circuits 2A, 2B to 7A, 7B in the odd-even interleaver 1 is to arrange the adjacent words to be contained in different error correction blocks. The reason why the transmission channel is combined at every data sequence formed of even-numbered words and formed of odd-numbered words is that, when they are interleaved, the distance between recording positions of adjacent even-numbered words and the odd-numbered words is made as large as possible.

In the output from the odd-even interleaver 1 appear PCM data sequences of 24 channels in a first arrangement state, from each of which one word is derived and then conveyed to a first encoder 8 whereby first check words $Q_{12n}, Q_{12n+1}, Q_{12n+2}, Q_{12n+3}$ are formed therefrom. A first error correction block containing the first check words $Q_{12n}, Q_{12n+1}, Q_{12n+2}, Q_{12n+3}$ is given as

$$w_{12n-12,A}, \ w_{12n-12,B}, \ w_{12n+1-12,A}, \ w_{12n+1-12,B},$$

$$w_{12n+4-12,A}, \ w_{12n+4-12,B}, \ w_{12n+5-12,A}, \ w_{12n+5-12,B},$$

$$w_{12n+8-12,A}, \ w_{12n+8-12,B}, \ w_{12n+9-12,A}, \ w_{12n+9-12,B},$$

$$w_{12n+2,A}, \ w_{12n+2,B}, \ w_{12n+3,A}, \ w_{12n+3,B},$$

$$w_{12n+6,A}, \ w_{12n+6,B}, \ w_{12n+7,A}, \ w_{12n+7,B},$$

$$w_{12n+10,A}, \ w_{12n+10,B}, \ w_{12n+11,A}, \ w_{12n+11,B},$$

$$Q_{12n}, \ Q_{12n+1}, \ w_{12n+2}, \ w_{12n+3}.$$

6

The first encoder 8 carries out its encoding such that the number of words contained in one block is n=28, the number of bits in one word is m=8 and the number of check words is k=4.

24 PCM data sequences and 4 check word series are supplied to an interleaver 9. The interleaver 9 changes the position of the transmission channels such that the check word series is interposed between the PCM data sequences of even-numbered words and odd-numbered words, and then carries out a delay process for interleaving. The delay processing of the interleaver 9 is performed by connecting delay circuits with delay amounts or times of 1D, 2D, 3D, 4D, . . . , 26D, 27D (where D represents a unit delay amount of, for example, 4 words) to 27 transmission channels except a 1st transmission channel, respectively.

In the output from the interleaver 9 appear 28 data sequences in a second arrangement state, from which one word each is derived and then supplied to an encoder 10 thereby generating second check words $P_{12n}$, $P_{12n+1}$, $P_{12n+2}$, $P_{12n+3}$. A second error correction block of 32 words which contains the second check words $P_{12n}$, $P_{12n+1}$, $P_{12n+2}$, $P_{12n+3}$ becomes as below:

$$W_{12n-12,A}, \ W_{12n-12(D+2),B}, \ W_{12n+1-12(2D+1),A},$$

$$W_{12n+1-12(3D+2),B}, \ W_{12n+4-12(4D+1),A}, \ W_{12n+4-12(5D+2),B},$$

$$W_{12n+5-12(6D+1),A}, \ W_{12n+5-12(7D+2),B}, \cdots$$

$$Q_{12n-12(12D)}, \ Q_{12n+1-12(13D+1)}, \ Q_{12n+2-12(14D)},$$

$$Q_{12n+3-12(15D+1)}, \cdots W_{12n+10-12(24D),A},$$

$$W_{12n+10-12(25D+1),B}, \ W_{12n+11-12(26D),A},$$

$$W_{12n+11-12(27D+1),B}, \ P_{12n}, \ P_{12n+1-12}, \ P_{12n+2}, \ P_{12n+3-12}$$

An interleaver 11 with one-word delay circuits is connected to even-numbered transmission channels within 32 data sequences containing the first and second check words. Inverters 12, 13, 14 and 15 are connected to receive the second check word series. The interleaver 11 prevents an error word over the boundary between adjacent error correction blocks from easily being made an uncorrectable error word. Moreover, the inverters 12 to 15 are used to prevent such a form of misoperation occurring that, due to dropout upon transmission, all data in one block are made "0"s and identified by the playback system as correct. It may be possible also to connect the inverters to receive the first check word series for the same purpose.

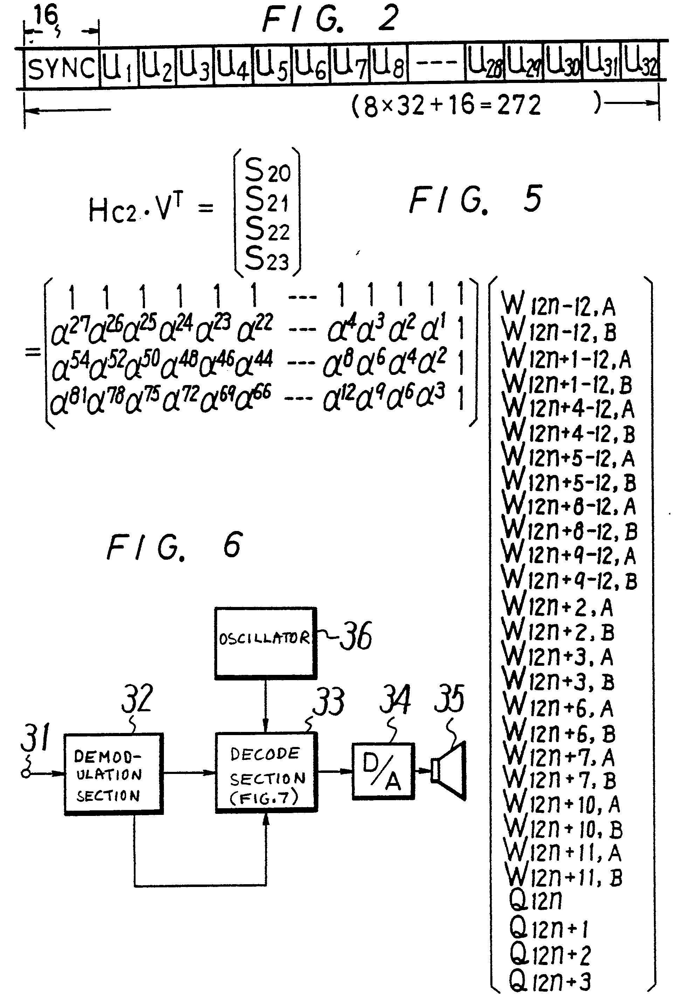

The PCM data are put in series for every 32 words resulting from 24 PCM data sequences and 8 check word series finally obtained, and as shown in Fig. 2, a synchronizing signal of, for example, 16 bits is added to its beginning to form one transmission block, which is then transmitted. In Fig. 2, one word derived from an i-th transmission channel is represented as $u_i$ for simplicity. As another example, 8 user bits may be inserted between the synchronizing signal and the 32 words of data.

The aforesaid encoder 8 is associated with the error correction codes mentioned before where n=28, m=8, and k=4, while the like encoder 10 is associated with the error correction codes where n=32, m=8 and k=4.

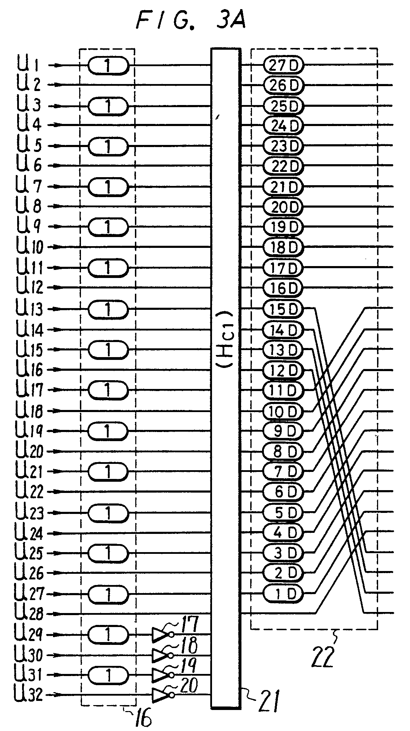

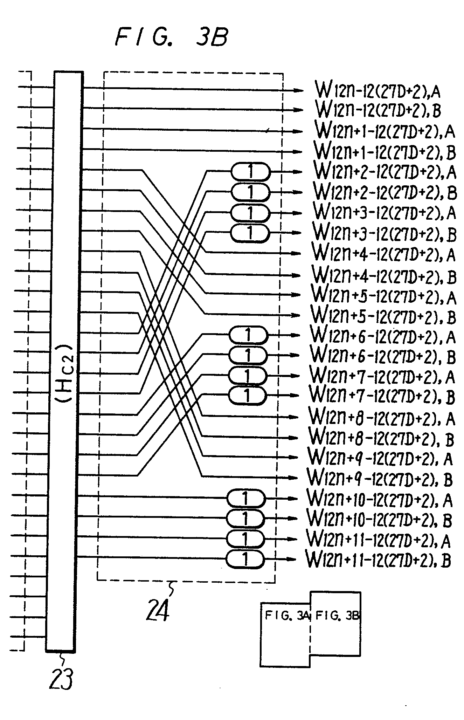

The reproduced data are supplied to an error correction decoder shown in Fig. 3 (formed of Figs. 3A and 3B) for every 32 words of one transmission block. Because of reproduction data, there may be a possibility that the data contain errors. If there is no error, 32 words which will be applied to the input of the decoder coincide with 32 words appearing in the output from the error correction encoder. The error correction decoder carries out de-interleave processing corresponding to the interleave processing in the encoder, then returning the data to the original order, and then effects error correction thereof.

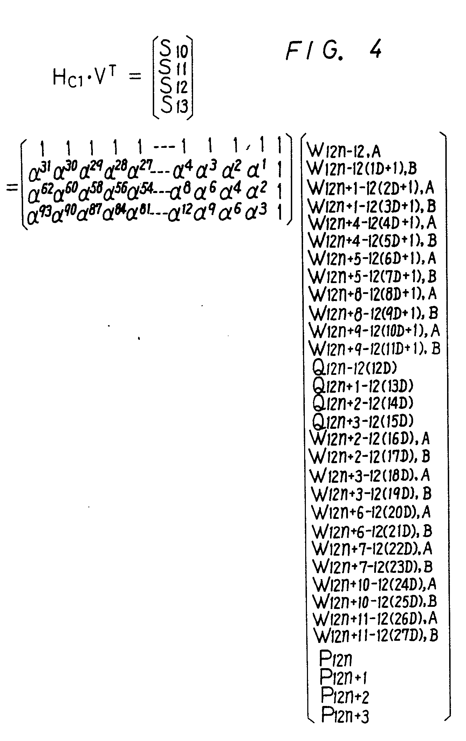

In the error correction encoder, there is provided a de-interleaver 16 which comprises one-word delay circuits connected to odd-numbered transmission channels. Inverters 17, 18, 19 and 20 are connected to receive the check word series. The outputs from the de-interleaver 16 and those from the inverters 17 to 20 are supplied to a first decoder 21. In the first decoder 21, as shown in Fig. 4, syndromes $S_{10}$, $S_{11}$, $S_{12}$ and $S_{13}$ are generated from a parity check matrix $H_{c1}$ and 32 words ($V^T$) supplied thereto, and error correction as mentioned before is carried out on the basis of the syndromes $S_{10}$, $S_{11}$, $S_{12}$ and $S_{13}$. In Fig. 4, $\alpha$ is an element of a galois field $GF(2^8)$ for

$$F(x) = x^8 + x^4 + x^3 + x^2 + 1.$$

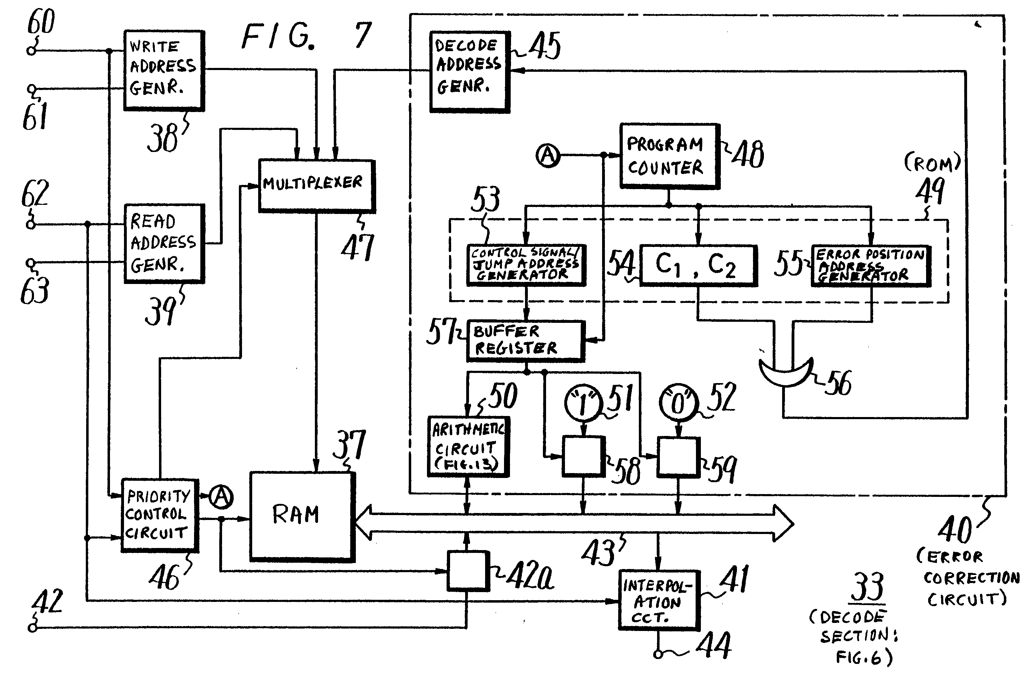

From the decoder 21 appear 24 PCM data sequences and 4 check word series, and the data sequence has added for each word a pointer of at least 1 bit indicating the presence or absence of error (the pointer is "1" for the presence of error and "0" for the absence of error). In Fig. 4 and Fig. 5, which will be described below, the received one word $\hat{w}_i$ is simply represented as $w_i$ for brevity.

The output data sequences from the decoder 21 are supplied to a de-interleaver 22. The purpose of the de-interleaver 22 is to cancel out the delays effected by the interleaver 9 in the error correction encoder. The 1st transmission channel to 27th transmission channel are respectively connected to delay circuits 27D, 26D, 25D, . . . 2D, 1D with different delays. The outputs from the de-interleaver 22 are supplied to a second decoder 23. In the decoder 23, as shown in Fig. 5, syndromes $S_{20}$, $S_{21}$, $S_{22}$ and $S_{23}$ are generated from a parity check matrix $H_{c2}$ and 28 words supplied thereto, and error correction is carried out on the basis of the syndromes $S_{20}$, $S_{21}$, $S_{22}$ and $S_{23}$.

Data sequences appearing in the output from the second decoder 23 are supplied to an odd-even de-interleaver 24. The odd-even de-interleaver 24 rearranges the PCM data sequences of even-numbered words and odd-numbered words contained with each other in alternate transmission channels, and the PCM data sequences of odd-numbered words are connected to one-word delay circuits. Thus, in the output from the odd-even de-interleaver 24 appear PCM data sequences with a wholly similar arrangement to those supplied to the error correction encoder and transmission channels of predetermined orders. In Fig. 3, though not shown, a concealment circuit is connected next to the odd-even de-interleaver 24 to perform amendment, for example concealing error that the decoders 21 and 23 could not correct or performing a mean value interpolation.

The foregoing part of this description explained the error correction code and the transmission system used in embodiments of apparatus for error correction according to this invention. These embodiments will now be described with reference to Figs. 6 to 20.

Fig. 6 shows the overall arrangement of a first embodiment of this invention. In Fig. 6, reference numeral 31 represents an external input terminal through which non-return-to-zero-inverted (NRZI) data derived, for example, from a digital audio disc is supplied to a demodulation section 32. The purpose of the demodulation section 32 is to demodulate data modulated in a modulation system which is suitable for the digital audio disc. For example, data modulated in the manner of 8 to 14-bit-block-coding is demodulated. The demodulation section 32 also generates a phase locked loop (PLL) clock with a frequency of, for example, 2.16 MHz, from the input data sequence. The data demodulated by the demodulation section 32 such as non-return-to-zero (NRZ) data of 2.16 M bits/sec and the aforesaid PLL clock are supplied to a decode section 33 which decodes previously coded data for error-correction. That is, the decode section 33 performs the de-interleaving and error correction. Data decoded by the decode section 33 is supplied through a digital-to-analog (D/A) converter 34 to a loudspeaker 35. Reference numeral 36 denotes an oscillator which produces a crystal clock signal.

Fig. 7 illustrates in detail the decode section 33 of Fig. 6. The decode section 33 comprises a random access memory (RAM) 37, a write address generator 38, a read address generator 39, an error correction circuit 40, and an interpolation circuit 41. The demodulated data from the demodulation section 32 (Fig. 6) is supplied via a data input terminal 42, a buffer 42a and a data bus 43 to the RAM 37 and then written therein in response to a read address from the read address generator 39. Then, on the basis of the read address from the read address generator 39, the data written in the RAM 37 are read out and supplied to the D/A converter 34 (Fig. 6) via the data bus 43, the interpolation circuit 41 and a data output terminal 44. Writing and reading the data in or from the RAM 37 ensures rearrangement of data, namely de-interleaving of data. Reference numeral 60 denotes a PLL clock input terminal, 61 a PLL frame synchronizing (sync) signal input terminal, 62 a crystal clock input terminal and 63 a crystal frame synchronizing (sync) signal input terminal.

While writing and reading the data, in accordance with a read address from the error correction circuit 40, more precisely a decode address from a decode address generator 45, the content stored in the RAM 37 is read out and then corrected for error. Reference numeral 46 denotes a priority control circuit for determining the order to access the RAM 37 in the order of the read address generator 39, the write address generator 38 and the error correction circuit 40. Reference numeral 47 denotes a multiplexer.

In this first embodiment of this invention, the error correction circuit 40 employs a horizontal microprogram system. That is to say, one step of the microprogram allows a plurality of function blocks to execute commands.

The error correction circuit 40 includes a program counter 48, a read-only memory (ROM) 49, an arithmetic circuit 50 for one word error correction, pointer addition circuits 51 and 52, and the decode address generator 45. The ROM 49 stores therein the microprogram, and respective fields of the ROM 49 form a control signal/jump address generator 53, a C1 decode/C2 decode address generator 54 and an error position address generator 55. The C1 decode corresponds to the decoder 21 of Fig. 3, while the C2 decode corresponds to the decoder 23 thereof.

The program counter 48 operates from a function clock derived from the priority control circuit 46 (refer to a terminal Ⓐ), by which the correction operation is performed at times except that of the de-interleaving operation in the RAM 37.

An address signal from the C1 decode/C2 decode address generator 54, representative of a word to be corrected for error, is supplied to the decode address generator 45 via a logical OR circuit 56. The decode address generator 45 is operated by this address signal to access the RAM 37 whose pointer is appointed, whereby the bits of the address signal from the C1 decode/C2 decode address generator 54 are reduced. The data read out from the RAM 37 on the basis of both the address generators 45 and 54 is transferred through the data bus 43 to the arithmetic circuit 50 for one word error correction. On the other hand, the control signal from the control signal/jump address generator 53 is supplied to the arithmetic circuit 50 for one word error correction by way of a buffer register 57 to execute the computation for error correction of each word in response to this control signal. At this time, the word to be corrected for error, namely the position of the error, is also identified by the arithmetic circuit 50 for one word error correction and, on the basis of the identified signal, the error position address generator 55 generates the error position address to instruct where in the block the word containing the error is located. This error position address is supplied through the logical OR circuit 56, the decode address generator 45 and the multiplexer 47 to the RAM 37 in which a pointer of value "1" is added through a buffer 58 to the error word and a pointer of value "0" is added through a buffer 59 to other words.

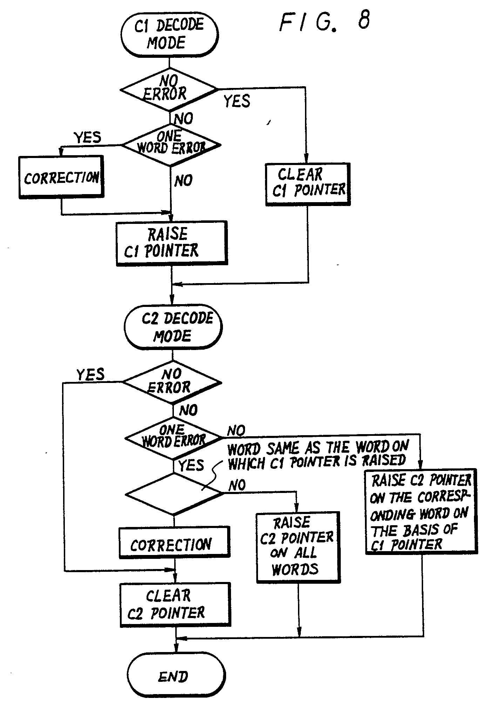

To facilitate understanding of the error correction circuit 40, a C1 decode mode and a C2 decode mode thereof will be described with reference to a flow chart shown in Fig. 8. Algorithms of the C1 decode mode and C2 decode mode begin with an operation to identify whether or not a first error correction code C1 contains an error. For no error, the C1 pointer is cleared (the pointer is made "0"). In the case of error, discrimination is made as to whether there is a one word error or plural word errors. For a plural word error, the C1 pointer is raised on the word containing an error (the pointer is made "1"). For a one word error, the word with an error is corrected and then the C1 pointer is raised on the word containing the error. As described above, the C1 decode mode is carried out.

In the succeeding C2 decode mode, identification is made of whether a second error correction code contains an error or not. For no error, the C2 pointer is cleared while, for error, identification is made of whether that error is a one word error or not. Thereafter, when one block contains plural word errors, while watching the C1 pointer, the C2 pointer is raised on the word corresponding thereto. For a one word error, identification is made of whether that word is the same as the word on which the C1 pointer was raised or not. If the word is the same, the error correction is carried out and, further, the C2 pointer is cleared, while if the word to which the C1 pointer was added differs from the error word, this is judged as mis-detection and the C2 pointer is therefore raised on all words in the block. In this way, the C2 decode mode is ended.

While watching the C2 pointer raised on each word as described above, the interpolation circuit 41 interpolates each word, for example, using pre-interpolation or intermediate-interpolation by way of example.

When the calculation processing is complicated as described above or as will be described below, many more calculation processing operations can be carried out in a short time period by controlling the respective function blocks which were arranged in parallel using the horizontal microprogram. To achieve more satisfactory efficiency in the calculation processing, the number of bits contained in one step has to be increased, as a result of which the memory capacity for storing the microprogram must be enlarged.

To solve such problem, a special format of microprogram may be employed. To be more specific, there are micro commands or formats which need a jump address and those which do not need one. Those which perform an unconditional jump or those which identify conditions thereof and then perform a jump in association with the identified result thereof require a jump address, while those which simply increment the program counter by +1 and then execute the microcommand of the next address after execution of the command do not require a jump address. In the present microprogram, a branch field is provided on the format whereby identification can be made of whether the format of interest needs a jump address or not. The format requiring the jump address employs a part of the control field as a jump address field, while the format requiring no jump address allows the control contents to be memorized in all control fields so that much more calculation processing operations can be carried out.

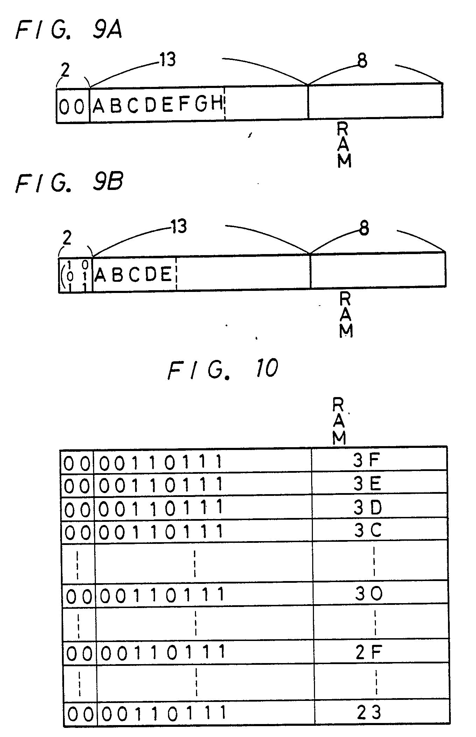

A practical format of microprogram memorized in the ROM 49 will now be described with reference to Figs. 9A and 9B.

In each of the illustrated formats, one step is formed of 23 bits which are respectively assigned to a branch field of 2 bits, a control field of 13 bits and a RAM address field of 8 bits. As illustrated, the format has two types associated with its use, and these two formats are discriminated from each other by the content of the branch field.

For the branch field whose content is "00", the format shown in Fig. 9A is employed. In accordance with this format, in no-operation, namely, in the next cycle, the following step is executed. In this case, 8 bits denoted by A to H in the control field of 13 bits are employed. The contents of commands indicated by the bits A to H will be described in detail later. On the other hand, for the branch fields "10", "01" and "11", the format shown in Fig. 9B is employed. In this format, 5 bits A to E in the control field of 13 bits are used as true control bits and the remaining 8 bits are employed as the jump address. For the branch field whose content is "10", the program moves to a step which the jump address designates. That is, the content of the jump address is transferred to the program counter 48. Moreover, for the branch fields whose contents are "01" and "11", the pointers "1' and "0" corresponding to the predetermined states are respectively identified to thereby jump the step.

The contents of the commands issued by the bits A to H in the control field will now be described.

The commands that the microprogram memorized in the ROM 49 will execute are roughly classified as:

   ① syndrome calculation;

   ② judgement of whether the syndromes $S_0$ to $S_3$ are all "0"s or not, i.e. whether there is error or not; and

   ③ error correction and addition of pointer.

The calculation of syndromes is respectively carried out as follows:

$$S_0 = \sum_{i=0}^{n-1} \hat{w}_i$$

$$S_1 = \sum_{i=0}^{n-1} \alpha^i \hat{w}_i$$

$$S_2 = \sum_{i=0}^{n-1} \alpha^{2i} \hat{w}_i$$

$$S_3 = \sum_{i=0}^{n-1} \alpha^{3i} \hat{w}_i \qquad \cdot$$

The presence or absence of error can be judged by detecting whether the following equation is satisfied or not.

$$S_0 = S_1 = S_2 = S_3$$

When this equation is satisfied, there is no error. In practice,

$$(S_0 \oplus S_1 \oplus S_2 \oplus S_3) \oplus S_0$$

is calculated, and when the result of this calculation is "0", it is judged that there is no error. ($\oplus$ represents mod. 2 addition).

The error correction begins with the operation to decide the error position. For a one word error, the error position will be determined by searching for the error location $i$ which satisfies

$$S_0 = \alpha^{-i} S_1 = \alpha^{-2i} S_2 = \alpha^{-3i} S_3.$$

Executing the command of

$$w_i = \hat{w}_i + S_0$$

in association with the error position $i$ makes correction of a one word error possible. As was already described, a one word error is corrected both in the C1 and C2 decode modes.

Two words error are corrected only in the C2 decode mode. In this case, the error position can be identified on the basis of the C1 pointer, so if these positions are taken as error locations $i$ and $j$ and calculation of

$$e_i = \frac{S_0 + \alpha^{-j} S_1}{1 + \alpha^{i-j}}$$

is performed, the error pattern $e_i$ can be obtained. The other error pattern $e_j$ is given by

$$e_j = e_i + S_0$$

Thus, executing the commands given as:

$$w_i = \hat{w}_i + e_i$$

$$w_j = \hat{w}_j + e_j$$

allows two error words to be corrected.

The control contents which the respective bits A to H in the control field of the aforesaid microprogram execute correspond to respective commands by which calculation of syndromes, judgement of error and error correction are performed as indicated in the following Table 1.

TABLE 1

| Bit | Branch field "1" | Branch field "0" |
|---|---|---|
| A | calculation of $\alpha^{-1}$ | calculation of syndromes |
| B | $w_i \leftarrow \hat{w}_i + S_0$ | identification of S=0 |
| C | RAM in the read mode | RAM in the write mode |
| D | calculation of syndromes is possible | calculation of syndromes is inhibited |
| E | calculation of S=0 | calculation of syndromes |
| F | no-operation | microprogram-end |
| G | no-operation | "1"→data bus (pointer is raised) |
| H | no-operation | "0"→data bus (pointer is cleared) |

In order that the afore-described formats may easily be understood, an examplary format in which syndromes of a predetermined data block in the C1 decode mode are calculated will be described with reference to Fig. 10.

In the examplary format shown in Fig. 10, the branch field has the content "0", which indicates a format being in a no-operation condition. 8 bits from A to H in the control field all have the indicated contents "00110111", and from the control contents indicated in Table 1 it is understood that syndromes are calculated (A=0), identification of S=0 is effected (B=0), the RAM 37 is put in the read mode (C=1), the calculation of syndromes is possible (D=1), syndromes are calculated (E=0) and the others are no-operations (F, G, H=1). In the RAM address field, the respective contents become 3F, 3E, 3D, 3C ... 30 ... 2F ... 23 so that 32 words in the block are respectively read out, where the RAM address field is expressed by a hexadecimal number.

The microprogram used in this embodiment can employ two formats depending on the branch fields whereby, when the jump address is not required, all of the control fields can be assigned to the control signal. Therefore, a step which requires no branching enables many more function blocks to execute the commands so that, in this case, the number of bits contained on one step can be reduced.

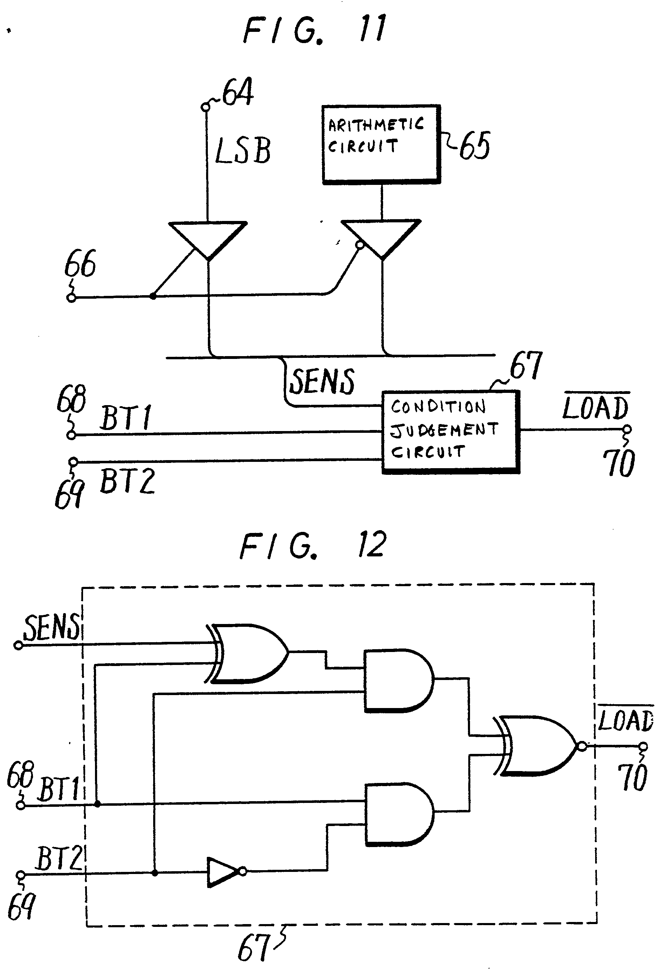

To identify the contents of the above branch field, a circuit shown in Fig. 11 can be used. In Fig. 11, a least significant bit (LSB) of the data bus is supplied to an input terminal 64, and reference numeral 65 denotes an arithmetic circuit for executing a predetermined calculation. A control signal applied to a control signal input terminal 66, for example one bit of the microprogram, is employed selectively to switch a signal from the input terminal 64 or a signal from the arithmetic circuit 65 whereby a signal SENS is supplied to a condition judgement circuit 67. The condition judgement circuit 67 is a combinational circuit for establishing a truth table shown in Table 2, in which the 2 bits BT 1 and BT 2 in the branch field are supplied to input terminals 68 and 69, respectively. The output from the condition judgement circuit 67 is supplied to a load terminal 70 of the program counter 48, whereby the condition is judged. More precisely, "1" indicates that the jump address should be transferred to the program counter 48, whereas "0" indicates that the content of the branch field is "no-operation".

TABLE 2

| BT1 | BT2 | SENS | $\overline{\text{LOAD}}$ |
|---|---|---|---|
| 0 | 0 | X | 1 |
| 1 | 0 | X | 0 |
| 0 | 1 | 1 | 0 |
| 0 | 1 | 0 | 1 |
| 1 | 1 | 1 | 1 |
| 1 | 1 | 0 | 0 |

As is well known, the truth table shown in Table 2 can be excluded, for example, by a circuit arrangement shown in Fig. 12. This requires no explanation.

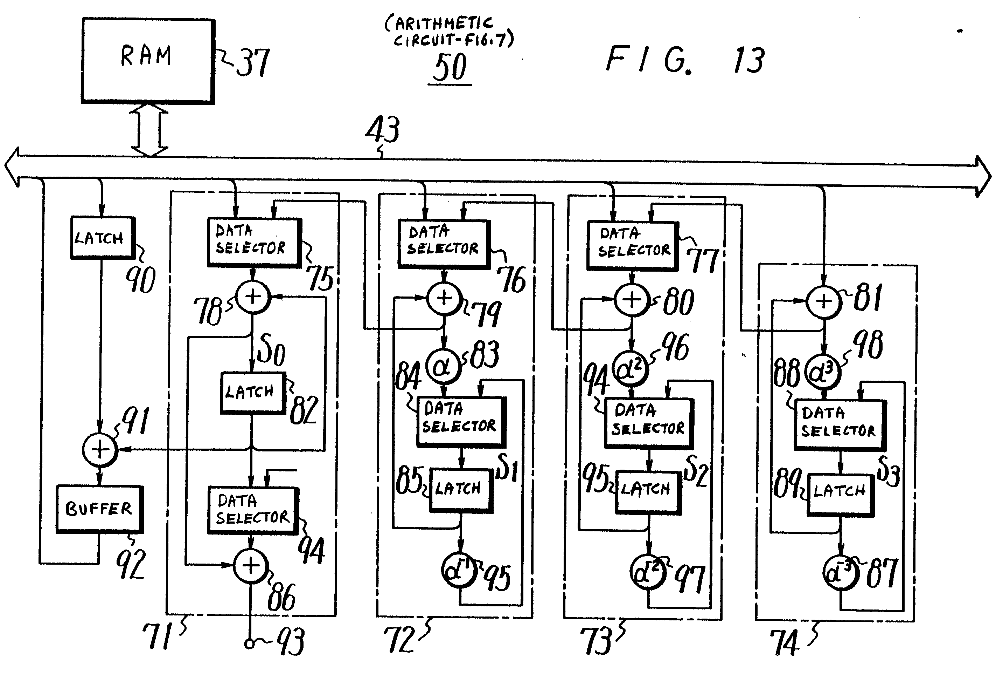

An example of the construction of the arithmetic circuit 50 for one word error correction, used in the arrangement of Fig. 7, will now be described with reference to Fig. 13.

The arithmetic circuit 50 for one word error correction comprises circuit units 71, 72, 73 and 74 that generate the syndromes $S_0$, $S_1$, $S_2$ and $S_3$, respectively. Then, the circuit units 72, 73 and 74 multiply the syndromes $S_1$, $S_2$ and $S_3$ by $\alpha^{-i}$, $\alpha^{-2i}$ and $\alpha^{-3i}$, respectively.

In this case, respective words of the block are sequentially transmitted through data selectors 75, 76 and 77 to adders 78, 79 and 80 and directly to an adder 81. The word transmitted to the adder 78 is fed back to the adder 78 via a latch 82 so that the circuit unit 71 produces the syndrome $S_0$. On the other hand, the word transmitted to the adder 79 in the circuit unit 72 is fed back to the adder 79 by way of an $\alpha$-multiplier 83, a data selector 84 and a latch 85 so that the circuit unit 72 produces the syndrome $S_1$. Similarly, the circuit units 73 and 74 generate the syndromes $S_2$ and $S_3$, respectively. This will need no explanation.

The syndromes $S_0$ to $S_3$ thus obtained yield

$$(S_0 \oplus S_1 \oplus S_2 \oplus S_3 \oplus S_4) \oplus S_0$$

That is, the syndrome $S_3$ is supplied through the data selector 77 to the adder 80 so as to be added to the syndrome $S_2$. The added content $(S_3 \oplus S_2)$ combined so far is transmitted through the data selector 76 to the adder 79 and therein added with the syndrome $S_1$. The added content $(S_1 \oplus S_2 \oplus S_3)$ made so far is transmitted through the data selector 75 to the adder 78 and thereby added with the syndrome $S_0$. The added content

$$(S_0 \oplus S_1 \oplus S_2 \oplus S_3)$$

thus obtained is added by the adder 86 with the syndrome $S_0$, resulting in

$$(S_0 \oplus S_1 \oplus S_2 \oplus S_3) \oplus S_0$$

The result of this calculation is judged and thereby the presence or absence of error is decided. The result of this calculation is delivered through a terminal 93.

The error position can be determined by dividing the syndromes $S_0$ to $S_3$ thus obtained by $\alpha^{-1}$, $\alpha^{-2}$ and $\alpha^{-3}$ in turn. In other words, the syndrome $S_3$ is circulated through the $\alpha^{-3}$-multiplier 87, the data selector 88 and the latch 89. Thus, i-th times circulations of the syndromes $S_3$ can yield $S_3\alpha^{-3i}$. In like manner, $S_0$, $S_1\alpha^{-i}$ and $S_2\alpha^{-2i}$ are obtained in other circuit units 71, 72 and 73. Monitoring whether $S_0$, $S_1\alpha^{-i}$, $S_2\alpha^{-2i}$ and $S_3\alpha^{-3i}$ are equal to one another or not enables the error position to be determined.

In association with i-th times circulations of the syndromes, an error position counter is incremented so that the error position address is determined by the content of this counter. To yield the error position address, it is sufficient to employ a ROM, by way of example. The RAM 37 can be accessed by transmitting the error position address to the aforesaid decode address generator 45 to designate the pointer.

After circulation of syndromes and generation of the error position address, correction of a one word error is carried out. That is, an error word $\hat{w}_i$ is read out in association with the error position address and then transferred to a latch 90. The error word $w_i$ stored in the latch 90 is added with the syndrome $S_0$ of the other latch 82 by an adder 91, which means $w_i \leftarrow w_i \oplus S_0$, whereby error correction is carried out by this addition. The word $w_i$ corrected for error is written in the RAM 37 via a buffer 92 and the data bus 43.

In the circuit unit 71 of Fig. 13, reference numeral 94 denotes a data selector. In the circuit unit 72, reference numeral 95 denotes an $\alpha^{-1}$-multiplier. In the circuit unit 73, reference numeral 96 denotes an

$\alpha^2$-multiplier and reference numeral 97 denotes an $\alpha^{-2}$-multiplier. In the circuit unit 74, reference numeral 98 denotes an $\alpha^3$-multiplier.

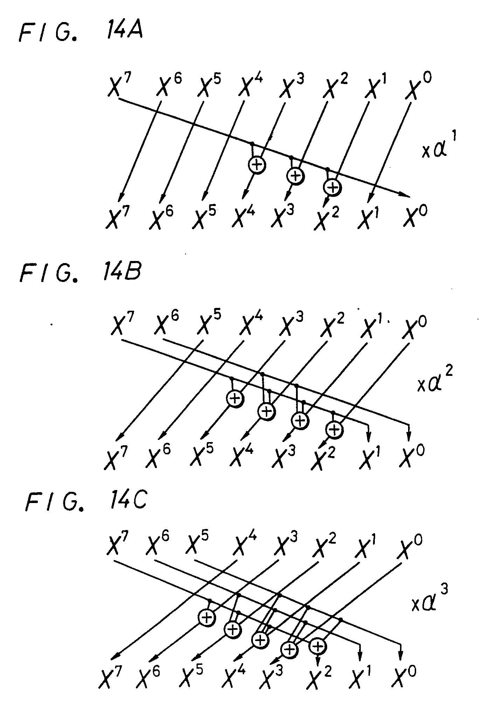

With this embodiment, the multipliers 83, 96 and 98 for multiplications of $\alpha^1$, $\alpha^2$ and $\alpha^3$ are respectively arranged as shown in Figs. 14A, 14B and 14C. Throughout Figs. 14A to 14C, symbols $\oplus$ each represent mod. 2 addition. In practice, the multipliers 83, 96 and 98 are respectively formed of exclusive-OR circuits. If it is taken into consideration that multiplications of $\alpha^1$, $\alpha^2$ and $\alpha^3$ respectively correspond to shifting the location of respective data by "1", "2" and "3" on a galois field $GF(2^8)$ and the generation polynomial is

$$X^8+X^4+X^3+X^2+1,$$

this can easily be understood.

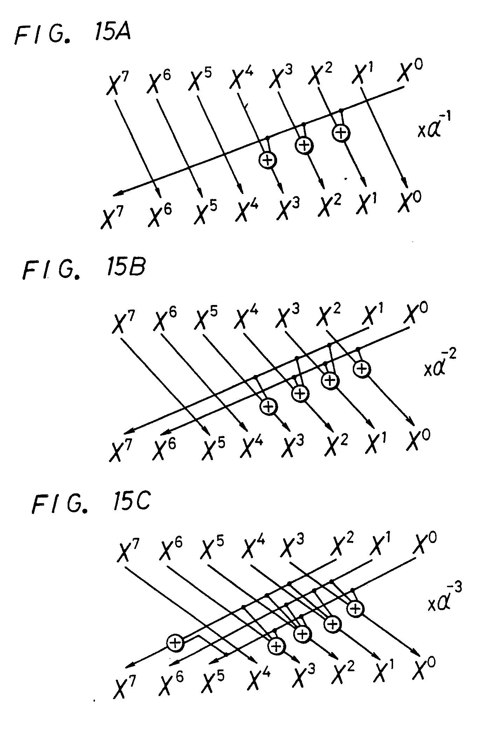

Similarly, the multipliers (dividers) 95, 97 and 87 for $\alpha^{-1}$, $\alpha^{-2}$ and $\alpha^{-3}$ are arranged as shown in Figs. 15A, 15B and 15C, respectively.

According to this embodiment, the decoding section is arranged not by random logic, as in the prior art, but as a microprogram system, so the ROM can be used many times and thereby the chip size can be kept small. Also, design can be facilitated when the circuitry is formed by LSI. Moreover, it is possible easily to judge which one of the programs to be loaded into the ROM is optimum.

With this embodiment, since a common bus is employed, the logic becomes so simple that more satisfactory design of the circuitry is ensured.

Moreover, the priority control circuit 46 executes reading and writing the address of the RAM 37, namely, it executes de-interleaving processing and error correction in a time sharing manner, so the decoding becomes efficient. Also, since the respective function circuits are arranged in parallel to one another and controlled by the horizontal microprogram system, respective commands can simultaneously be executed, resulting in more efficient decoding.

Furthermore, the format of the microprogram is added with the branch field whereby the microprogram requiring branching and that requiring no branching can be discriminated. The microprogram requiring branching is made to contain therein the jump address, while the microprogram requiring no branching can enlarge the number of control bits by the number of bits to be assigned to the jump address so that many more commands can be executed with a smaller capacity ROM.

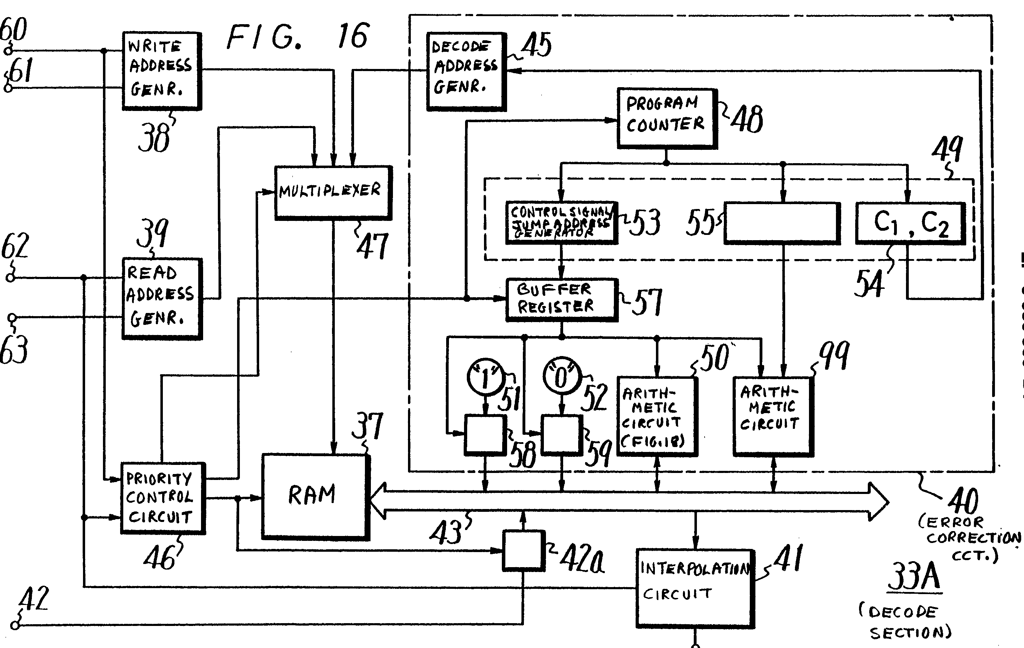

The foregoing explanation of the first embodiment of the invention has now been completed. A second embodiment of apparatus for error correction according to the present invention will now be described with reference to Figs. 16 to 20.

Fig. 16 shows a circuit arrangement of a decode section 33A according to the second embodiment of the invention, wherein parts corresponding to those of Fig. 7 are designated by the same references and will not be described in detail.

In Fig. 16, the arithmetic circuit 50 for one word error correction of Fig. 7 is modified and an arithmetic circuit 99 for erasing two words pointer is added. With this second embodiment, referring to the pointer raised in the C1 decode mode, the position of words containing errors is closely watched in the C2 decode mode whereby an error, if it is a two words error, can also be corrected.

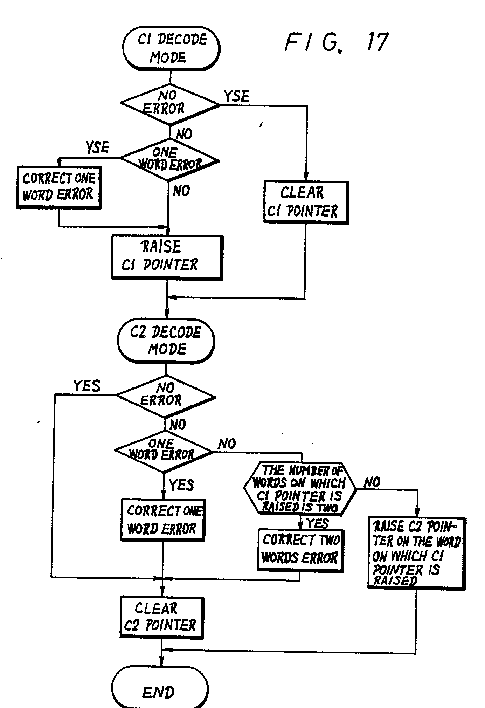

. The second embodiment of the present invention will now be described in conjunction with a float chart shown in Fig. 17. Similar calculation processing to that of Fig. 8 is carried out in the C1 decode mode, while the calculation of syndromes is first performed in the C2 check mode and, thereafter, a judgement is made as to whether or not an error exists. For no error, the C2 pointer is cleared. In the case of error, a judgement is made as to whether or not the error is a one word error. If it is a one word error, error correction is carried out and the C2 pointer is then cleared. For an error not being a one word error but a plural words error, the number of C1 pointers in the C1 decode mode is counted to identify whether or not it is "1". If "2", correction of a two words error is carried out and the C2 pointer is also erased. On the other hand, when the number of words to which the C1 pointer is added is 3 or more, the C2 pointer is added thereto in response to the C1 pointer whereby interpolation can be made in association therewith.

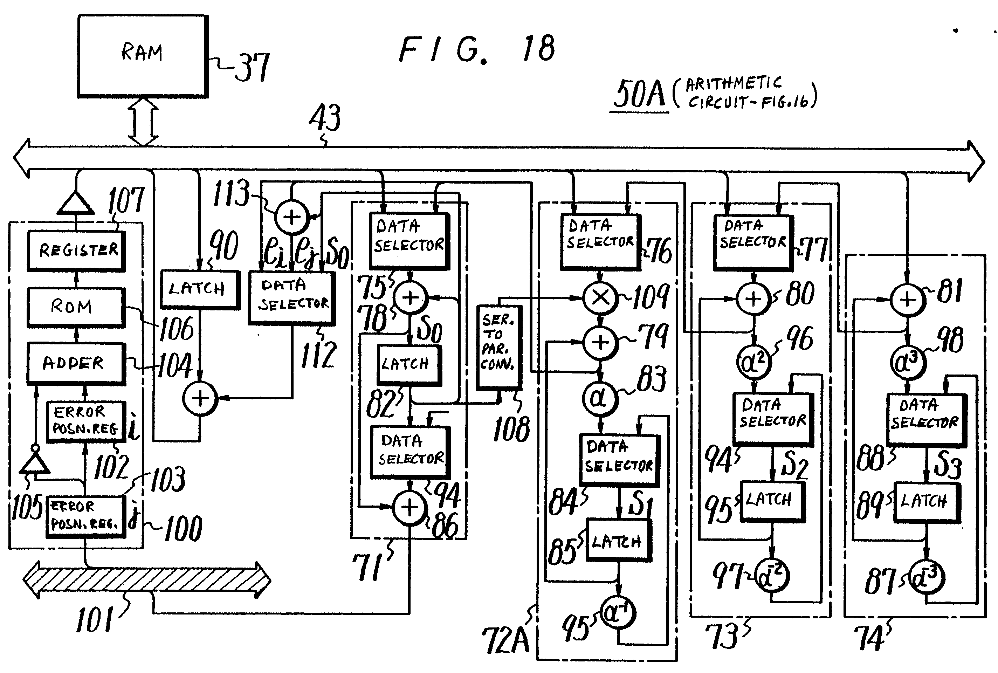

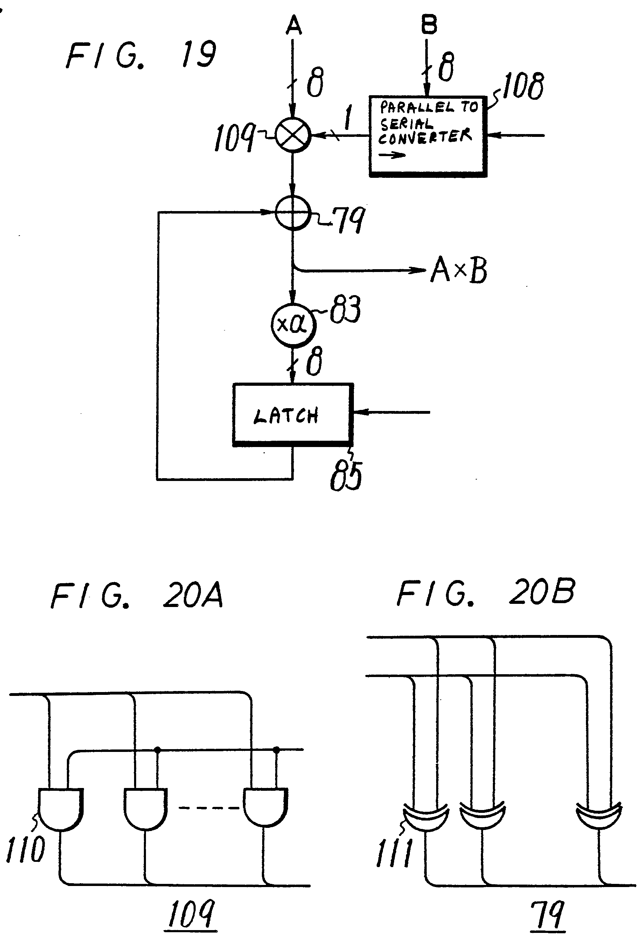

The arithmetic circuit 50 for one word error correction and the arithmetic circuit 99 for erasing two words error will now be described with reference to Figs. 18 and 19. In this embodiment, as will be described below, adding a $(1+\alpha^{i-j})^{-1}$ generation circuit 100 to the arithmetic circuit (referenced 50A in Fig. 18) for one word error correction makes it possible for the arithmetic circuit 50A to correct two words error.

In Fig. 18, the arithmetic circuit 50A for one word error correction, when in the C1 decode mode, calculates the syndromes to correct one word error and so on, in similar manner to the example of Fig. 13. This will not be described again.

As was described before, correction of two words error requires calculation of the following equation for the error pattern $e_i$:

$$e_i = \frac{S_0 + \alpha^{-j} S_1}{1 + \alpha^{i-j}}$$

In the above calculation, the denominator term $(1+\alpha^{i-j})^{-1}$ is calculated by the $(1+\alpha^{i-j})^{-1}$ generation circuit 100, and then $(1+\alpha^{i-j})^{-1}$ is multiplied with $(S_0+\alpha^{-j}S_1)$ corrected in a circuit unit 72A.

The $(1+\alpha^{i-j})^{-1}$ generation circuit 100 carries out the calculation with a so-called look-up table using a ROM or programmable logical array (PLA). To be more specific, error position data i and j from the error position address generator 55 (refer to Fig. 16) are transferred in turn through a control bus 101 to error position registers 103 and 102. Then, the error position data i and j are added together in an adder 104, thereby produced as data (i−j). The data from the error position register 103 is fed to the adder 104 via an inverter 105. The output from this adder 104 is supplied to, for example, a ROM 106 that has memorized therein a table for converting (i−j) to $(1+\alpha^{i-j})^{-1}$ so that the ROM 106 produces as its output $(1+\alpha^{i-j})^{-1}$. The result of calculation is then transferred to a register 107.

The denominator terms $(S_0+\alpha^{-j}S_1)$ is generated as follows. In the circuit unit 72A, data from a latch 85, namely the syndrome, $S_1$, is circulated through a loop of an $\alpha^{-1}$-multiplier 95, a data selector 84 and the latch 85 j times so that the latch 85 generates $\alpha^{-j}S_1$. The $\alpha^{-j}S_1$ thus generated is transmitted via an adder 79 and a data selector 75 to an adder 78 in another circuit unit 71, while the syndrome $S_0$ latched in a latch 82 is transmitted to the adder 78 whereby the term $(S_0+\alpha^{-j}S_1)$ thereby generated is transferred to the latch 82.

The so-generated numerator term and denominator term are multiplied with each other on a galois field $GF(2^8)$ by a serial-to-parallel converter 108, a multiplier 109, an $\alpha$-multiplier 83 and an adder 79.

Elements resulting from eliminating the zero element from the galois field $GF(2^n)$ constitute a cyclic group. Elements A and B except the zero element are expressed as $A=\alpha^i$ and $B=\alpha^j$, and the multiplication $A \times B$ is expressed as

$$A \times B = (\alpha^i) \times (\alpha^j) = \alpha^{i+j}.$$

Consequently, with a conversion table for converting elements to the locations thereof and a reverse conversion table, the result of the multiplication $A \times B$ can be obtained. In other words, the elements A and B are converted by the conversion table to their locations i and j. Thereafter, the locations i and j are added to yield (i+j), and (i+j) is then further converted by the reverse conversion table to $A \times B(=\alpha^{i+j})$.

Although such conversion and reverse conversion can be realized by a ROM and so on, such an arrangement requires a ROM with a capacity of 256 bytes for a galois field $GF(2^8)$, leading to a complex circuit arrangement. Furthermore, if the order $2^8$ is increased and becomes $2^9$, the capacity of the ROM has to be increased abruptly to 1024 bytes, which is four times as large as the former capacity.

Therefore, with the second embodiment of the present invention, the aforesaid multiplication $A \times B$ is carried out as will hereinafter be described with reference to Fig. 19 which results from omitting irrelevant portions of Fig. 18 so as to facilitate the understading thereof. In Fig. 19, data $A(=(1+\alpha^{i-j})^{-1})$ is supplied to an 8-bit multiplier 109 (mod. 2) as parallel data. The multiplier 109 comprises 8 AND circuits 110 each having two inputs, for example as shown in Fig. 20A. The other data $B(=S_0+\alpha^{-j}S_1)$ is converted by a parallel-to-serial converter 108 to serial data and then supplied to the multiplier 109. The output from the multiplier 109 is fed back to the adder 79 (mod. 2) via the adder 79, the $\alpha$-multiplier 83 and the latch 85. The adder 79 comprises a 8 two-input type exclusive-OR circuits 111, for example as shown in Fig. 20B.

With this arrangement, with a clock of 8 bits or when serial data is transmitted in an amount of 8 bits, the multiplication on the galois field $GF(2^8)$ is carried out. If, now, the element A is taken as $\alpha^{20}(=10110100)$ and the element B is taken as $\alpha^9(=00111010)$ and the elements A and B are multiplied with each other, as the output of the adder 79, the following calculation results are achieved for respective clocks, namely, from 1st to 8th clocks.

| 1st clock; | 0 0 0 0 0 0 0 0 |
| 2nd clock; | 0 0 0 0 0 0 0 0 |
| 3rd clock; | 1 0 1 1 0 1 0 0 |
| 4th clock; | 1 1 0 0 0 0 0 1 |
| 5th clock; | 0 0 1 0 1 0 1 1 |
| 6th clock; | 0 1 0 1 0 1 1 0 |
| 7th clock; | 0 0 0 1 1 0 0 0 |
| 8th clock; | 0 0 1 1 0 0 0 0 |

where it is clear that 00110000 represents $\alpha^{29}$ and this value corresponds to the multiplication $A \times B$.
That the aforesaid multiplication can be generalized will now be proved.
An element of the galois field $GF(2^n)$ is given below by vector representation:

$$a_{n-1}\alpha^{n-1}+a_{n-2}\alpha^{n-2}+ \ldots +a_1\alpha+a_0$$

If, now, n=8 is established, the data A and B are expressed as:

$$A = a_7\alpha^7 + a_6\alpha^6 + \ldots + a_1\alpha + a_0$$

$$B = b_7\alpha^7 + b_6\alpha^6 + \ldots + b_1\alpha + b_0$$

and the multiplication A×B is given as below:

$$A \times B = b_7 \cdot A \cdot \alpha^7 + b_6 \cdot A \cdot \alpha^6 + b_5 \cdot A \cdot \alpha^5 + b_4 \cdot A \cdot \alpha^4$$

$$+ b_3 \cdot A \cdot \alpha^3 + b_2 \cdot A \cdot \alpha^2 + b_1 \cdot A \cdot \alpha + b_0 \cdot A$$

thus yielding

$$A \times B = (((((( b_7 \cdot A \cdot \alpha + b_6 \cdot A) \cdot \alpha + b_5 \cdot A) \cdot \alpha + b_4 \cdot A) \cdot \alpha + b_3 \cdot A) \cdot \alpha + b_2 \cdot A) \cdot \alpha + b_1 \cdot A) \cdot \alpha + b_0 \cdot A$$

Accordingly, it is apparent that the multiplication on the galois field $GF(2^8)$ can be carried out by the aforesaid calculation. That is, it should be noted that all calculations in the parentheses in the above equation be expressed by $x \cdot \alpha + b_i \cdot A$. By way of example, in the first calculation, i=6 and $x = b_7 \cdot A$ are established, and in the next calculation, i=5 and $x = (b_7 \cdot A \cdot \alpha + b_6 \cdot A)$ are established. For this reason, a circuit for calculating $x \cdot \alpha + b_i \cdot A$ is formed of gate circuits and the result of the calculation made by the circuits is circulated thereby to execute in turn calculations from the term in the innermost parentheses.

Although the arrangement made so far needs a clock of $n$ bits, namely, 8 bits in this embodiment, the circuit arrangement can be considerably simplified. By way of example, a prior art multiplier employing a ROM is required to carry out the look-up table of the ROM for converting locations of elements to elements and the reverse conversion thereof so that, if n=8 is given, capacity of 512 bytes is required for the ROM. Let n be assumed as 9. Then, 1024 bytes are required. Whereas, according to the present system, the circuit arrangement can be formed of substantially 40 circuit elements such as flip-flop circuits, AND circuits, exclusive-OR circuits and so on. It should particularly be noted that even if the number of bits contained in the data is increased, the circuit arrangement does not have to be made correspondingly complex. In other words, in the case of employing the prior art ROM, if $n$ is increased by 1, the ROM is generally required to have a capacity twice as large as before. However, in accordance with the present system, it is sufficient merely to increase the number of gate circuits. Accordingly, if $n$ is increased from 8 to 9, the number of circuit elements is increased only from 40 to 50.

As described above, the error pattern

$$e_i = \frac{S_0 + \alpha^{-j}S_1}{1 + \alpha^{i-j}}$$

is produced as the output of the adder 79 in the circuit unit 72A. Referring again to Fig. 18, this error pattern $e_i$ is supplied to an adder 91 via a data selector 112, while the adder 91 is supplied with an error word $\hat{w}_i$ via the latch 90 so that the adder 91 carries out the error correction of $w_i \leftarrow \hat{w}_i + e_i$.

Since the other error pattern $e_j$ results from $e_j \leftarrow S_0 + e_i$, an adder 113 carries out this addition. As regards the error pattern $e_j$ thus obtained, the adder 91 executes the error correction of $w_j \leftarrow \hat{w}_j + e_j$.

With the second embodiment described so far, it can easily be understood that similar operation and effects to those of the first embodiment can be achieved. Moreover, according to the second embodiment, since error correction in the C1 decode mode is reliable, whether the error is a two words error or not is identified by the error pointer obtained during this mode and if so, up to two word errors can be corrected, thus improving error correction ability.

Furthermore, according to the second embodiment of the invention, the multipliers for producing the error patterns are formed of gate circuits. That is, the element A as parallel data and the element B as serial data are multiplied by the multiplier 109 at $n$ clocks (8 clocks in practice) and the result of multiplication at each clock is made to circulate through the loop of the adder 79, the $\alpha$-multiplier 83 and the latch 85 thereby added to one another. In this case, the adder 79 and the multiplier 109 are formed of gate circuits as was shown in Fig. 20. The $\alpha$-multiplier 83 is also formed of gate circuits as was described in connection with Fig. 14. Therefore, while 8 clocks are required to execute the multiplication, the circuitry thereof can be greatly simplified. Also, there is then an advantage that, in spite of increased bit numbers of the elements, the number of gates necessary is small.

Particularly when the elements of the galois field $GF(2^n)$ are multiplied to correct two words error in the apparatus for error correction, such apparatus can be achieved by simple arrangement and error correction ability resulting from correcting two words error can be improved easily.

As described above, according to the present apparatus for error correction, operations of error correction and pointer addition can be executed simultaneously or in parallel by the microprogram stored in the memory, so that the efficiency of calculation processing can be improved. Moreover, due to the

# EP 0 086 566 B1

microprogram, hardware in the prior art random logic can be replaced by firmware, thus simplifying the circuit arrangement.

This invention is not limited to the aforesaid embodiments, which can be subjected to various modifications without departing from the scope of the invention. For example, in the first embodiment, one word error is detected in the C2 decode mode. When this error word does not have the C1 pointer added, it is judged that erroneous decoding was carried out and the C2 pointer is then added to all words in the block. In this case, if there are four C1 pointers of the C1 decode mode, it is judged that four words error were erroneously decoded as one word error in the C2 decode mode (the first embodiment is likely to cause such an error). Accordingly, only the word to which the C1 pointer was added may be interpolated.

Also, it is possible that up to two words error may be corrected in the C1 decode mode.

## Claims

1. Apparatus for error correction, comprising:

data input and output means (43) for receiving and outputting data sequences containing plural data words and/or check words;

delay means (37) connected to the data input and output means (43) and arranged to be supplied with data sequences containing previously interleaved blocks each including plural data words and check words and to derive data sequences containing de-interleaved blocks each including plural data words; and

error correction means (40) operative to effect error correction of error correction blocks each including plural data words and check words by using the plural data words and check words included therein, the error correction means (40) comprising an error correction arithmetic circuit (50; 50A) for performing an error correction calculation, and a pointer addition circuit (51, 52) for adding a pointer to the data words in association with an error state of the error correction blocks;

the apparatus being characterised by:

random access memory means (37) that constitutes said delay means;

a write address generator (38) on the basis of which said previously interleaved blocks are written into the random access memory means (37);

a read address generator (39) on the basis of which said de-interleaved blocks are read out from the random access memory means (37); and

said error correction means (40) being connected to the random access memory means (37) and being operative to effect error correction during writing and reading of said data sequences, the error correction means (40) comprising:

read and write address generator means (45) on the basis of which the plural data words and check words in each error correction block are read out from the random access memory means (37) so as to be supplied to the error correction arithmetic circuit (50; 50A) and error corrected data words are written into the random access memory means (37); and

a program memory (49) for memorising a microprogram with fields to control the error correction arithmetic circuit (50; 50A), the read and write address generator means (45) and the pointer addition circuit (51, 52).

2. Apparatus according to claim 1, wherein the microprogram has a format (Figs. 9A, 9B) containing a branch field, a control field and a random access memory address field, and the branch field specifies the presence or absence of a jump and the condition thereof, whereby in a format with the possibility of such a jump, a part of the control field becomes a jump address.

3. Apparatus according to claim 1 or claim 2, wherein the error correction arithmetic circuit (50A) includes a galois field multiplication circuit (108, 109, 79, 83) in which, in use, parallel data of n bits making up an element A of a galois field $GF(2^n)$ is sequentially multiplied with each bit of serial data of n bits making up an element B of the galois field $GF(2^n)$, data of n bits resulting in turn from the multiplication are supplied to an adder and multiplied by a root $\alpha$ of a generation polynomial of the galois field $GF(2^n)$, and data resulting from the multiplication are delayed by one bit each and fed back to the adder thereby to compute $A \times B$ on the galois field $GF(2^n)$.

## Patentansprüche

1. Fehlerkorrekturanordnung mit

—einem Dateneingabe-/-ausgabemittel (43) zum Aufnehmen und Ausgeben von Datensequenzen, die eine Vielzahl von Datenwörten und/oder Prüfwörtern enthalten,

—einem Verzögerungsmittel (37), das mit dem Dateneingabe-/-ausgabemittel (43) verbunden ist und angeordnet ist, um mit Datensequenzen versorgt zu werden, die vorher verschachtelte Blöcke enthalten, welche jeweils eine Vielzahl von Datenwörtern und Prüfwörtern enthalten, und um Datensequenzen abzuleiten, die entschachtelte Blöcke enthalten, wovon jeder eine Vielzahl von Datenwörtern enthält, und

—ein Fehlerkorrekturmittel (40), das betreibbar ist, um eine Fehlerkorrektur von Fehlerkorrekturblöcken, die jeweils eine Vielzahl von Datenwörtern und Prüfwörtern enthalten, durch Benutzung der Vielzahl von Datenwörtern und Prüfwörtern, die darin enthalten sind, zu bewirken, wobei das Fehlerkorrekturmittel (40) eine airthmetische Fehlerkorrekturschaltung (50; 50A) zum Durchfüren einer Fehler-

16

korrekturberechnung und eine Markierbit-Additionsschaltung (51, 52) zum Addieren eines Markierbits zu den Datenwörtern in Verbindung mit einem Fehlerzustand der Fehlerkorrekturblöcke umfaßt,

welche Anordnung gekennzeichnet ist durch

—einen Speicher mit wahlfreiem Zugriff (37), der das Verzögerungsmittel darstellt,

—einen Schreibadressengenerator (38), auf dessen Grundlage die vorher verschachtelten Blöcke in den Speicher mit wahlfreiem Zugriff (37) eingeschrieben werden,

einen Leseadressengenerator (39), auf dessen Grundlage die entschachtelten Blöcke aus dem Speicher mit wahlfreiem Zugriff (37) ausgelesen werden, und dadurch,

—daß das Fehlerkorrekturmittel (40) mit dem Speicher mit wahlfreiem Zugriff (37) verbunden ist und betreibbar ist, um eine Fehlerkorrektur während des Einschreibens und Auslesens der Datensequenzen zu bewirken, wobei das Fehlerkorrekturmittel (40) umfaßt:

—ein Lese- und Schreibadressenerzeugungsmittel (45), auf dessen Grundlage die Vielzahl von Datenwörtern und Prüfwörtern in jedem Fehlerkorrekturblock aus dem Speicher mit wahlfreiem Zugriff (37) ausgelesen werden, um sie der arithmetischen Fehlerkorrekturschaltung (50; 50A) zuzuführen, und fehlerkorrigierete Datenwörter in den Speicher mit wahlfreiem Zugriff (37) eingeschrieben werden, und

—einen Programmspeicher (49) zum Speichern eines Mikroprogramms mit Feldern zum Steuern der arithmetischen Fehlerkorrekturschaltung (50; 50A), des Lese- und Schreibadressenerzeugungsmittels (45) und der Markierbit-Additionsschaltung (51, 52).

2. Anordnung nach Anspruch 1, bei der das Mikroprogramm ein Format (Fig. 9A, Fig. 9B) hat, das ein Verzweigungsfeld, ein Steuerfeld und ein Adreßfeld für einen Speicher mit wahlfreiem Zugriff enthält, wobei das Verzweigungsfeld das Vorliegen oder das Nichtvorliegen eines Sprunges und die Bedingung desselben angibt, wodurch in einem Format mit der Möglichkeit eines solchen Sprunges ein Teil des Steuerfeldes zu einer Sprungadresse wird.

3. Anordnung nach Anspruch 1 oder 2, bei der die arithmetische Fehlerkorrekturschaltung (50A) eine Galoisfeld-Multiplikationsschaltung (108, 109, 79, 83) enthält, in der im Betrieb parallele Daten aus n Bits, die ein element A eines Galoisfeldes GF($2^n$) ausmachen, sequentiell mit jedem Bit von seriellen Daten aus n Bits, die ein Element B das Galoisfeldes GF($2^n$) ausmachen, multipliziert werden, wobei Daten aus n Bits, die sich ihrerseits aus der Multiplikation ergeben, einem Addierer zugeführt werden und mit einem Werzelausdruck α eines Erzeugungspolynoms des Galoisfeldes GF($2^n$) multipliziert werden und Daten, die sich aus der Multiplikation ergeben, jeweils um ein Bit verzögert werden und zu dem Addierer zurückgeführt werden, um dadurch A×B für das Galoisfeld GF($2^n$) zu berechnen.

**Revendications**

1. Dispositif de correction d'erreurs, comprenant:

des moyens d'entrée et de sortie de données (43) destinés à recevoir et à émettre des séquences de données contenant plusieurs mots de données et/ou mots de contrôle;

des moyens de retard (37) connectés aux moyens d'entrée et de sortie de données (43), et conçus pour recevoir des séquences de données contenant des blocs qui ont été entrelacés précédemment, chacun d'eux comprenant plusieurs mots de données et mots de contrôle, et à élaborer des séquences de données contenant des blocs désentrelacés, contenant chacun plusieurs mots de données; et

des moyens de correction d'erreurs (40) qui effectuent une correction d'erreurs sur des blocs de correction d'erreurs comprenant chacun plusieurs mots de données et mots de contrôle, en utilisant les différents mots de données et mots de contrôle que contiennent ces blocs, les moyens de correction d'erreurs (40) comprenant un circuit arithmétique de correction d'erreurs (50; 50A) destiné à effectuer un calcul de correction d'erreurs, et un circuit d'ajout de pointeur (51, 52) destiné à ajouter un pointeur aux mots de données, en association avec une condition d'erreur des blocs de correction d'erreurs;

le dispositif étant caractérisé par:

une mémoire vive (37) qui constitue les moyens de retard;

un générateur d'adresse d'écriture (38) sur la base duquel les blocs entrelacés précédemment sont écrits dans la mémoire vive (37);

un générateur d'adresse de lecture (39) sur la base duquel les blocs désentrelacés sont lus dans la mémoire vive (37); et

le fait que les moyens de correction d'erreurs (40) sont connectés à la mémoire vive (37) et effectuent une correction d'erreurs pendant l'écriture et la lecture des séquences de données, les moyens de correction d'erreurs (40) comprenant:

des moyens de génération d'adresse de lecture et d'écriture (45) sur la base desquels les différents mots de données et mots de contrôle dans chaque bloc de correction d'erreurs sont lus dans la mémoire vive (37), de façon à être appliqués au circuit arithmétique de correction d'erreurs (50; 50A), et des mots de données corrigés sont écrits dans la mémoire vive (37); et

une mémoire de programme (49) qui est destinée à mémoriser un microprogramme comportant des zones pour la commande du circuit arithmétique de correction d'erreurs (50; 50A), des moyens de génération d'adresse de lecture et d'écriture (45) et du circuit d'ajout de pointeur (51, 52).

2. Dispositif selon la revendication 1, dans lequel le microprogramme a un format (figure 9A, 9B) qui contient une zone de branchement, une zone de commande et une zone d'adresse de mémoire vive, et la zone de branchement spécifie la présence ou l'absence d'un saut et la condition de celui-ci, grâce à quoi dans un format qui offre la possibilité d'un tel saut, une partie de la zone de commande devient une adresse de saut.

3. Dispositif selon la revendication 1 ou la revendication 2, dans lequel le circuit arithmétique de correction d'erreurs (50A) comprend un circuit de multiplication sur un champ de Galois (108, 109, 79, 83) dans lequel, pendant l'utilisation, des données en parallèle à n bits qui constituent un élément A d'un champ de Galois $GF(2^n)$ sont multipliées séquentiellement avec chaque bit de données série à n bits qui constituent un élément B du champ de Galois B $GF(2^n)$, les données à n bits qui résultent tour à tour de la multiplication sont appliquées à un additionneur et sont multipliées par une racine $\alpha$ d'un polynôme générateur du champ de Galois $GF(2^n)$, et les données qui résultent de la multiplication sont retardées d'un bit chacune et sont renvoyées vers l'additionneur, pour calculer ainsi $A \times B$ sur le champ de Galois $GF(2^n)$.

## F I G. 1A

F I G. 1B

W12n-12, A
1D — 1 — W12n-12(1D+2), B
2D — W12n+1-12(2D+1), A
3D — 1 — W12n+1-12(3D+2), B
4D — W12n+4-12(4D+1), A
5D — 1 — W12n+4-12(5D+2), B
6D — W12n+5-12(6D+1), A
7D — 1 — W12n+5-12(7D+2), B
8D — W12n+8-12(8D+1), A
9D — 1 — W12n+8-12(9D+2), B
10D — W12n+4-12(10D+1), A
11D — 1 — W12n+4-12(11D+2), B
12D — Q12n-12(12D)
13D — 1 — Q12n+1-12(13D+1)
14D — Q12n+2-12(14D)
15D — 1 — Q12n+3-12(15D+1)
16D — W12n+2-12(16D), A
17D — 1 — W12n+2-12(17D+1), B
18D — W12n+3-12(18D), A
19D — 1 — W12n+3-12(19D+1), B
20D — W12n+6-12(20D), A
21D — 1 — W12n+6-12(21D+1), B
22D — W12n+7-12(22D), A
23D — 1 — W12n+7-12(23D+1), B
24D — W12n+10-12(24D), A
25D — 1 — W12n+10-12(25D+1), B
26D — W12n+11-12(26D), A
27D — 1 — W12n+11-12(27D+1), B

9

10

P12n — P̄12n
P12n+1 — 1 — 12 — P̄12n+1-12
P12n+2 — 13 — P̄12n+2
P12n+3 — 1 — 14 — P̄12n+3-12
— 15

11

2

## FIG. 2

| SYNC | $U_1$ | $U_2$ | $U_3$ | $U_4$ | $U_5$ | $U_6$ | $U_7$ | $U_8$ | --- | $U_{28}$ | $U_{29}$ | $U_{30}$ | $U_{31}$ | $U_{32}$ |

16

$(8 \times 32 + 16 = 272 \quad )$

## FIG. 5

$$
H_{c2} \cdot V^T =
\begin{pmatrix}
S_{20} \\
S_{21} \\
S_{22} \\
S_{23}
\end{pmatrix}
$$

$$
=
\begin{bmatrix}
1 & 1 & 1 & 1 & 1 & 1 & --- & 1 & 1 & 1 & 1 & 1 \\
\alpha^{27} & \alpha^{26} & \alpha^{25} & \alpha^{24} & \alpha^{23} & \alpha^{22} & --- & \alpha^4 & \alpha^3 & \alpha^2 & \alpha^1 & 1 \\
\alpha^{54} & \alpha^{52} & \alpha^{50} & \alpha^{48} & \alpha^{46} & \alpha^{44} & --- & \alpha^8 & \alpha^6 & \alpha^4 & \alpha^2 & 1 \\
\alpha^{81} & \alpha^{78} & \alpha^{75} & \alpha^{72} & \alpha^{69} & \alpha^{66} & --- & \alpha^{12} & \alpha^9 & \alpha^6 & \alpha^3 & 1
\end{bmatrix}
\begin{bmatrix}
W_{12n-12, A} \\
W_{12n-12, B} \\
W_{12n+1-12, A} \\
W_{12n+1-12, B} \\
W_{12n+4-12, A} \\
W_{12n+4-12, B} \\
W_{12n+5-12, A} \\
W_{12n+5-12, B} \\
W_{12n+8-12, A} \\
W_{12n+8-12, B} \\
W_{12n+9-12, A} \\
W_{12n+9-12, B} \\
W_{12n+2, A} \\
W_{12n+2, B} \\
W_{12n+3, A} \\
W_{12n+3, B} \\
W_{12n+6, A} \\
W_{12n+6, B} \\
W_{12n+7, A} \\
W_{12n+7, B} \\
W_{12n+10, A} \\
W_{12n+10, B} \\
W_{12n+11, A} \\
W_{12n+11, B} \\
Q_{12n} \\
Q_{12n+1} \\
Q_{12n+2} \\
Q_{12n+3}
\end{bmatrix}
$$

## FIG. 6

- OSCILLATOR — 36
- 31 → DEMODULATION SECTION (32)
- DECODE SECTION (FIG.7) (33)
- D/A (34)
- 35

## FIG. 3A

*F I G. 3B*

$W_{12n-12(27D+2),A}$
$W_{12n-12(27D+2),B}$
$W_{12n+1-12(27D+2),A}$
$W_{12n+1-12(27D+2),B}$
$W_{12n+2-12(27D+2),A}$
$W_{12n+2-12(27D+2),B}$
$W_{12n+3-12(27D+2),A}$
$W_{12n+3-12(27D+2),B}$
$W_{12n+4-12(27D+2),A}$
$W_{12n+4-12(27D+2),B}$
$W_{12n+5-12(27D+2),A}$
$W_{12n+5-12(27D+2),B}$
$W_{12n+6-12(27D+2),A}$
$W_{12n+6-12(27D+2),B}$
$W_{12n+7-12(27D+2),A}$
$W_{12n+7-12(27D+2),B}$
$W_{12n+8-12(27D+2),A}$
$W_{12n+8-12(27D+2),B}$
$W_{12n+9-12(27D+2),A}$
$W_{12n+9-12(27D+2),B}$
$W_{12n+10-12(27D+2),A}$
$W_{12n+10-12(27D+2),B}$
$W_{12n+11-12(27D+2),A}$
$W_{12n+11-12(27D+2),B}$

$(H_{C2})$

23

24

FIG. 3A  FIG. 3B

$$
H_{C1} \cdot V^T = \begin{bmatrix} S_{10} \\ S_{11} \\ S_{12} \\ S_{13} \end{bmatrix}
$$

FIG. 4

$$
= \begin{bmatrix} 1 & 1 & 1 & 1 & 1 & \text{---} & 1 & 1 & 1 & 1 & 1 \\ \alpha^{31} & \alpha^{30} & \alpha^{29} & \alpha^{28} & \alpha^{27} & \text{---} & \alpha^4 & \alpha^3 & \alpha^2 & \alpha^1 & 1 \\ \alpha^{62} & \alpha^{60} & \alpha^{58} & \alpha^{56} & \alpha^{54} & \text{---} & \alpha^8 & \alpha^6 & \alpha^4 & \alpha^2 & 1 \\ \alpha^{93} & \alpha^{90} & \alpha^{87} & \alpha^{84} & \alpha^{81} & \text{---} & \alpha^{12} & \alpha^9 & \alpha^6 & \alpha^3 & 1 \end{bmatrix}
\begin{bmatrix}
W_{12n-12, A} \\
W_{12n-12(1D+1), B} \\
W_{12n+1-12(2D+1), A} \\
W_{12n+1-12(3D+1), B} \\
W_{12n+4-12(4D+1), A} \\
W_{12n+4-12(5D+1), B} \\
W_{12n+5-12(6D+1), A} \\
W_{12n+5-12(7D+1), B} \\
W_{12n+8-12(8D+1), A} \\
W_{12n+8-12(9D+1), B} \\
W_{12n+9-12(10D+1), A} \\
W_{12n+9-12(11D+1), B} \\
Q_{12n-12(12D)} \\
Q_{12n+1-12(13D)} \\
Q_{12n+2-12(14D)} \\
Q_{12n+3-12(15D)} \\
W_{12n+2-12(16D), A} \\
W_{12n+2-12(17D), B} \\
W_{12n+3-12(18D), A} \\
W_{12n+3-12(19D), B} \\
W_{12n+6-12(20D), A} \\
W_{12n+6-12(21D), B} \\
W_{12n+7-12(22D), A} \\
W_{12n+7-12(23D), B} \\
W_{12n+10-12(24D), A} \\
W_{12n+10-12(25D), B} \\
W_{12n+11-12(26D), A} \\
W_{12n+11-12(27D), B} \\
P_{12n} \\
P_{12n+1} \\
P_{12n+2} \\
P_{12n+3}
\end{bmatrix}
$$

FIG. 7

EP 0 086 566 B1

FIG. 8

```
        ┌─────────────┐
        │  C1 DECODE  │
        │    MODE     │
        └─────────────┘
              │
           ◇ NO ◇
          < ERROR > ──── YES ────┐
           ◇    ◇                │
              │ NO               │
      YES  ◇ ONE ◇               │
     ┌──── < WORD ERROR >        │
     │      ◇    ◇               │
     ▼         │ NO              ▼
┌───────────┐  │          ┌─────────────┐
│CORRECTION │  │          │   CLEAR     │
└───────────┘  │          │  C1 POINTER │
     │         │          └─────────────┘
     │         ▼                 │
     │   ┌─────────────┐         │
     └──▶│   RAISE     │         │
         │  C1 POINTER │         │
         └─────────────┘         │
               │                 │
               ◀─────────────────┘
               │
        ┌─────────────┐
        │  C2 DECODE  │
        │    MODE     │
        └─────────────┘
               │
    YES    ◇  NO  ◇
   ┌────── < ERROR >
   │        ◇    ◇
   │           │ NO
   │    ◇  ONE   ◇   NO
   │   < WORD ERROR > ──── WORD SAME AS THE WORD ON
   │    ◇        ◇         WHICH C1 POINTER IS RAISED
   │       │ YES                        │
   │       ▼                            │
   │    ◇        ◇   NO        ┌──────────────────┐
   │   <          > ─────┐     │ RAISE C2 POINTER │
   │    ◇        ◇       │     │ ON THE CORRESP-  │
   │       │             │     │ ONDING WORD ON   │
   │       ▼             ▼     │ THE BASIS OF     │
   │ ┌───────────┐  ┌─────────┐│ C1 POINTER       │
   │ │CORRECTION │  │  RAISE  │└──────────────────┘
   │ └───────────┘  │   C2    │         │
   │       │        │ POINTER │         │
   │       ▼        │ ON ALL  │         │
   │ ┌───────────┐  │  WORDS  │         │
   └▶│   CLEAR   │  └─────────┘         │
     │ C2 POINTER│       │              │
     └───────────┘       │              │
           │             │              │
           ◀─────────────┴──────────────┘
           │
     ┌───────────┐
     │    END    │
     └───────────┘
```

*FIG. 9A*

*FIG. 9B*

*FIG. 10*

| | | RAM |
|---|---|---|
| 0 0 | 0 0 1 1 0 1 1 1 | 3 F |
| 0 0 | 0 0 1 1 0 1 1 1 | 3 E |
| 0 0 | 0 0 1 1 0 1 1 1 | 3 D |
| 0 0 | 0 0 1 1 0 1 1 1 | 3 C |
| | | |
| 0 0 | 0 0 1 1 0 1 1 1 | 3 O |
| | | |
| 0 0 | 0 0 1 1 0 1 1 1 | 2 F |
| | | |
| 0 0 | 0 0 1 1 0 1 1 1 | 2 3 |

## F I G. 11

## F I G. 12

F I G. 13

*F I G.    14A*

*F I G.    14B*

*F I G.    14C*

12

FIG. 15A

FIG. 15B

FIG. 15C

FIG. 16

FIG. 17

FIG. 18

50A (ARITHMETIC CIRCUIT-FIG.16)

EP 0 086 566 B1

FIG. 19

FIG. 20A

109

FIG. 20B

79